# EUROPEAN PATENT SPECIFICATION

(11) **EP 4 142 429 B1**
(45) Date of publication and mention of the grant of the patent: **12.11.2025**
(21) Application number: 21792422.4
(22) Date of filing: 12.04.2021
(51) Int. Cl.: H04W 40/22, H04W 40/24, H04W 76/14, H04W 88/04, H04W 80/02, H04W 92/10, H04W 92/18

(54) **INFORMATION TRANSMISSION METHOD AND DEVICE, APPARATUS, AND COMPUTER READABLE STORAGE MEDIUM**
INFORMATIONSÜBERTRAGUNGSVERFAHREN UND -VORRICHTUNG, VORRICHTUNG UND COMPUTERLESBARES SPEICHERMEDIUM
PROCÉDÉ ET DISPOSITIF DE TRANSMISSION D'INFORMATIONS, APPAREIL, ET SUPPORT D'ENREGISTREMENT LISIBLE PAR ORDINATEUR

(30) Priority: 20.04.2020 CN 202010315891
(43) Date of publication of application: 01.03.2023
(60) Divisional application: 25203760.1
(73) Proprietor: Datang Mobile Communications Equipment Co., Ltd., Beijing 100085 (CN)
(72) Inventor: ZHAO, Yali, Beijing 100083 (CN); WANG, Da, Beijing 100083 (CN)
(74) Representative: Dompatent Partnerschaft von Patent- und Rechtsanwälten mbB
(86) International application number: PCT/CN2021/086615
(87) International publication number: WO 2021/213205

(56) References cited:
- EP-A1- 4 106 410
- WO-A1-2018/176416
- CN-A- 102 026 411
- CN-A- 104 869 666
- CN-A- 105 657 865
- CN-A- 108 617 024
- CN-A- 108 617 024
- US-A1- 2017 289 845
- HUAWEI: "Report of email discussion [96#57][LTE/FeD2D] - Adapter layer and bearer handling", vol. RAN WG2, no. Athens, Greece; 20170213 - 20170217, 4 February 2017 (2017-02-04), pages 1 - 11, XP051223384, Retrieved from the Internet <URL:http://www.3gpp.org/ftp/tsg_ran/WG2_RL2/TSGR2_97/Docs/> [retrieved on 20170204]
- NOKIA ET AL: "Discussion on adaptation layer for FeD2D", vol. RAN WG2, no. Reno, USA; 20161114 - 20161118, 4 November 2016 (2016-11-04), XP051191979, Retrieved from the Internet <URL:http://www.3gpp.org/ftp/tsg_ran/WG2_RL2/TSGR2_96/Docs/> [retrieved on 20161104]
- "3rd Generation Partnership Project; Technical Specification Group Services and System Aspects; Study on system enhancement for Proximity based Services (ProSe) in the 5G System (5GS) (Release 17)", vol. SA WG2, no. V0.3.0, 27 January 2020 (2020-01-27), pages 1 - 70, XP051860835, Retrieved from the Internet <URL:ftp://ftp.3gpp.org/Specs/archive/23_series/23.752/23752-030.zip 23752-030_rm.doc> [retrieved on 20200127]
- "3rd Generation Partnership Project; Technical Specification Group Radio Access Network; Study on further enhancements to LTE Device to Device (D2D), User Equipment (UE) to network relays for Internet of Things (IoT) and wearables; (Release 15)", 3GPP STANDARD; TECHNICAL REPORT; 3GPP TR 36.746, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.1.1, 15 April 2018 (2018-04-15), pages 1 - 55, XP051451110
- HUAWEI ET AL: "Study aspects of UE-to-Network relay and solutions for L2 relay", vol. RAN WG2, no. Online; 20200817 - 20200828, 7 August 2020 (2020-08-07), XP052361155, Retrieved from the Internet <URL:https://ftp.3gpp.org/tsg_ran/WG2_RL2/TSGR2_111-e/Docs/R2-2008047.zip R2-2008047.doc> [retrieved on 20200807]

## Description

### TECHNICAL FIELD

The present disclosure relates to the field of communications technology, in particular to an information transmission method, and an information transmission device.

### BACKGROUND

In order to expand network coverage, Layer 2 (L2) relays can be considered. The L2 relay may be a terminal with a relay function.

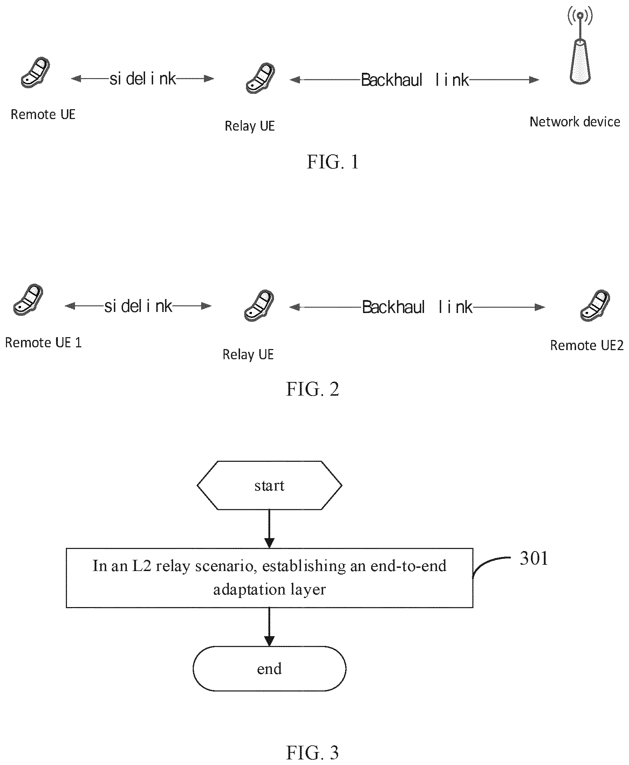

A schematic diagram of UE-to-Network Relay is shown in FIG. 1. For UE-to-Network Relay, the interface between the L2 relay and the network is a Uu interface, and the interface between the L2 relay and the relayed User Equipment (UE) (or called a remote UE) is a direct communication interface (Sidelink interface or PCS interface). The link between the L2 relay and the network may be referred to as a backhaul link for the remote UE.

A schematic diagram of UE-to-UE Relay is shown in FIG. 2. For UE-to-UE relay, the interfaces between the L2 relay and the remote UE are all sidelink interfaces.

The bearer in the L2 relay scenario is divided into three types:
(1) Sidelink interface bearer: that is, the bearer between the remote UE and the relay UE;
(2) The end-to-end bearer between the remote UE and the network device: that is, the end-to-end bearer established between the remote end and the network device;
(3) Bearer of the remote UE on the backhaul link of the Uu interface: that is, the bearer used to bear the data of the remote UE between the relay UE and the network device.

Regardless of the type of bearer, the bearers and the logical channels are in one-to-one correspondence, and the logical channel has a corresponding logical channel identifier.

At present, in the L2 relay scenario, there is no solution on how to design the adaptation layer.

Huawei: "Report of email discussion [96#57][LTE/FeD2D] - Adapter layer and bearer handling" 3GPP DRAFT; R2-1701133 discusses the Layer 2 UE-to-Network Relay.

Nokia, Alcatel-Lucent Shanghai Bell: "Discussion on adaptation layer for FeD2D" 3GPP DRAFT; R2-168399 discusses the scenario in which Multiple remote UE's DRB can be multiplexed to one DRB of relay UE in Uu.

CN108617024 provides a bearing managing method for a layer-two relay. The service data of a remote UE is borne on a dedicated bearer of a relay UE. Between the eNB and a service gateway, both the service data of the remote UE and the service data of the relay UE are borne in respective S1-U GTP channels.

3GPP TR23.752 v0.3.0 recites the policy rules includes PC5 parameters.

3GPP TR36.746 v15.1.1 is the technical report on further enhancements to LTE Device to Device (D2D), User Equipment (UE) to network relays for Internet of Things (IoT) and wearables.

EP4106410A1 provides a sidelink relay communication method and apparatus, a device, and a medium. The sidelink relay communication method is applied to user equipment, UE-to-Network relay communication. The method includes the following processes. The relay UE receives a data packet from a source communication device through a first bearer between the source communication device and the relay UE, where the data packet is mapped to the first bearer by the source communication device. The relay UE maps the data packet to a second bearer between the relay UE and a target communication device and transmits the data packet to the target communication device, where either the source communication device comprises a remote UE and the target communication device comprises a base station or the source communication device comprises a base station and the target communication device comprises a remote UE.

### SUMMARY

The invention is defined by the independent claims. Additional features of the invention are provided in the dependent claims.

Embodiments of the present disclosure provide an information transmission method according to claim 1, and device according to claim 13, so that in in the L2 relay scenario, data transmission between the remote UE and the network device or between two remote UEs can be normally performed. The invention is set out in the appended set of claims.

In an embodiment of the present disclosure, an end-to-end adaptation layer is established in an L2 relay scenario; the functions of the adaptation layer include one or a combination of the following: routing, bearer mapping. The solution in an embodiment of the present disclosure may ensure that the data transmission is performed normally through the relay between the remote UE and the network device or between two remote UEs.

### BRIEF DESCRIPTION OF THE DRAWINGS

In order to illustrate the technical solutions of the embodiments of the present disclosure more clearly, the following briefly introduces the accompanying drawings used in the embodiments of the present disclosure. Obviously, the accompanying drawings in the following description are only some embodiments of the present disclosure. For those of ordinary skill in the art, other drawings can also be obtained from these drawings without creative work.
FIG. 1 is a schematic diagram of UE-to-Network Relay in the related art;
FIG. 2 is a schematic diagram of UE-to-UE Relay in the related art;
FIG. 3 is a flowchart of an information transmission method provided by an embodiment of the present disclosure;
FIG. 4 is a first schematic diagrams of a PDU header of an adaptation layer PDU provided by an embodiment of the present disclosure;
FIG. 5 is a second schematic diagram of a PDU header of an adaptation layer PDU provided by an embodiment of the present disclosure;
FIG. 6 is a first schematic diagrams of a protocol stack provided by an embodiment of the present disclosure;
FIG. 7 is a second schematic diagram of a protocol stack provided by an embodiment of the present disclosure;
FIG. 8 is a third schematic diagram of a protocol stack provided by an embodiment of the present disclosure;
FIG. 9 is a fourth schematic diagram of a protocol stack provided by an embodiment of the present disclosure;
FIG. 10 is a third schematic diagram of a PDU header of an adaptation layer PDU provided by an embodiment of the present disclosure;
FIG. 11 is a fifth schematic diagram of a protocol stack provided by an embodiment of the present disclosure;
FIG. 12 is a sixth schematic diagram of a protocol stack provided by an embodiment of the present disclosure;
FIG. 13 is a seventh schematic diagram of a protocol stack provided by an embodiment of the present disclosure;
FIG. 14 is an eighth schematic diagram of a protocol stack provided by an embodiment of the present disclosure;
FIG. 15 is a fourth schematic diagram of a PDU header of an adaptation layer PDU provided by an embodiment of the present disclosure;
FIG. 16 is a fifth schematic diagram of a PDU header of an adaptation layer PDU provided by an embodiment of the present disclosure;
FIG. 17 is a sixth schematic diagram of a PDU header of an adaptation layer PDU provided by an embodiment of the present disclosure;
FIG. 18 is a seventh schematic diagram of a PDU header of an adaptation layer PDU provided by an embodiment of the present disclosure;
FIG. 19 is an eighth schematic diagram of the PDU header of the adaptation layer PDU provided by the embodiment of the present disclosure;
FIG. 20 is a ninth schematic diagram of the PDU header of the adaptation layer PDU provided by the embodiment of the present disclosure;
FIG. 21 is a structural diagram of an information transmission device provided by an embodiment of the present disclosure;
FIG. 22 is a structural diagram of an information transmission apparatus provided by an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are part of the embodiments of the present disclosure, but not all of the embodiments. Based on the embodiments in the present disclosure, all other embodiments obtained by those of ordinary skill in the art without creative efforts shall fall within the protection scope of the present invention as defined by the appended claims.

FIG. 3 is a flowchart of an information transmission method provided by the present disclosure, as shown in FIG. 3, including the following steps:
Step 301, in a layer 2 (L2) relay scenario, establishing an end-to-end adaptation layer; wherein, functions of the adaptation layer include one or a combination of the following: routing and bearer mapping.

Referring to FIG. 1 and FIG. 2, the relayed UE may also be referred to as a remote UE.

Hereinafter, in conjunction with different relay scenarios, the specific structure of the PDU and the data transmission process in the embodiment of the present disclosure will be described in detail.

### The first scenario: UE-to-Network relay scenario

In this scenario, the PDU header of the adaptation layer PDU has two formats:

Format 1: The PDU header of the adaptation layer PDU at least includes: a bearer identifier of the remote UE on the sidelink interface.

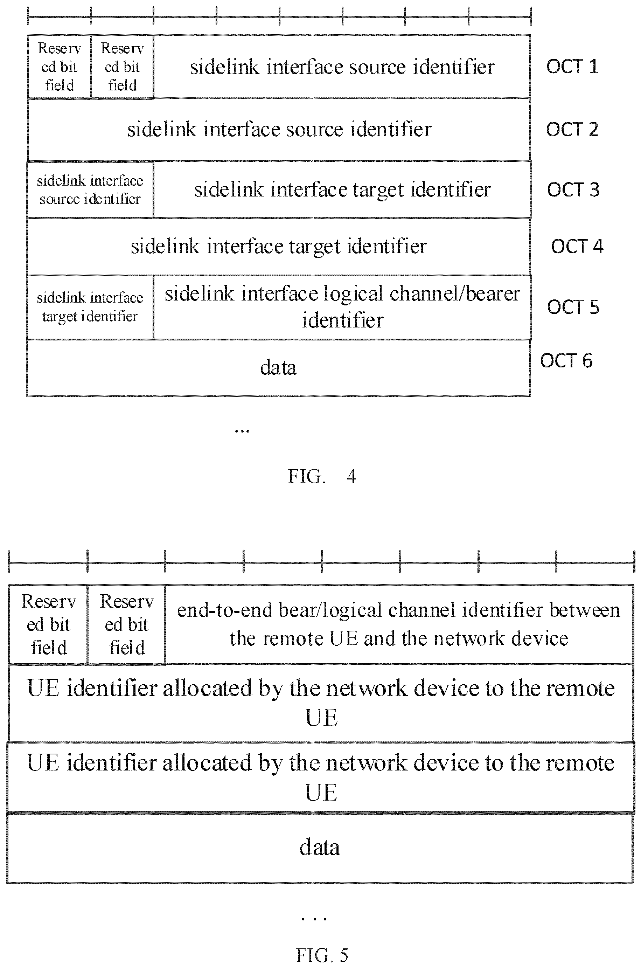

As shown in FIG. 4, the bearer identifier of the remote UE on the sidelink interface includes: a sidelink interface source L2 ID, a sidelink interface destination L2 ID, and a sidelink interface logical channel identifier; or, the bearer identifier of the remote UE on the sidelink interface includes: a sidelink interface source L2 ID, a sidelink interface destination L2 ID, and a sidelink interface bearer identifier. Further, the PDU header of the adaptation layer PDU further includes a sidelink interface cast type identifier. The cast type may include unicast, groupcast, broadcast, and the like.

Format 2: The PDU header of the adaptation layer PDU at least includes: a identifier of the end-to-end bearer between the remote UE and the network device allocated by the network device to the remote UE.

As shown in FIG. 5, the identifier of the end-to-end bearer between the remote UE and the network device allocated by the network device to the remote UE includes: UE identity information allocated by the network device to the remote UE, an end-to-end logical channel identifier between the remote UE and the network device; or, the identifier of the end-to-end bearer between the remote UE and the network device allocated by the network device to the remote UE includes: UE identity information allocated by the network device to the remote UE, an end-to-end bearer identifier between the remote UE and the network device.

Wherein, the UE identity information allocated by the network device to the remote UE may be C-RNTI (Cell RNTI, cell radio network temporary identity).

In practical applications, there are several modes to use the PDU header of the adaptation layer PDU:
Mode 1: a same format 1 of the PDU header of adaptation layer PDU is used in both the uplink and downlink transmission;
Mode 2: a same format 2 of the PDU header of the adaptation layer PDU is used in both the uplink and downlink transmission;;
Mode 3: the format 1 of the PDU header of the adaptation layer PDU is used in the uplink transmission, the format 2 of the PDU header of the adaptation layer PDU is used in the downlink transmission;
Mode 4: the format 1 of the PDU header of the adaptation layer PDU is used in the downlink transmission, the format 2 of the PDU header of the adaptation layer PDU is used in the uplink transmission.

In the first scenario, there are two modes to design the adaptation layer:
Mode 1: Establishing an end-to-end adaptation layer between the remote UE and the network device.

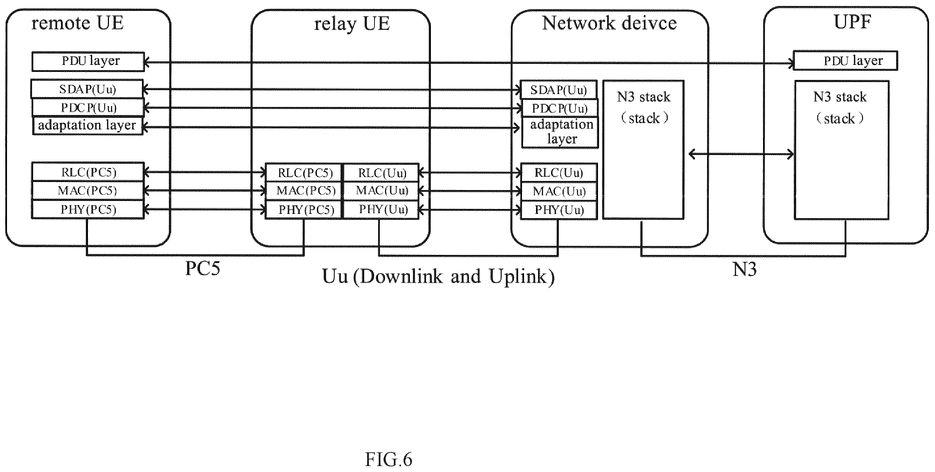

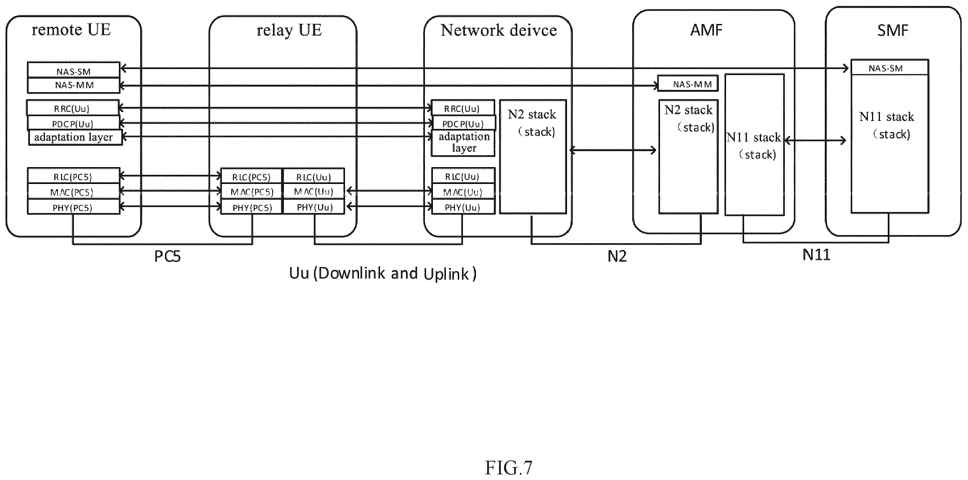

Specifically, an end-to-end adaptation layer (Adaptation) is added above the RLC layer of the remote UE and the RLC layer of the network device. FIGS. 6 and 7 show the structure of the protocol stack after the adaptation layer is introduced. FIG.6 shows the protocol stack in the user plane, and FIG. 7 shows the protocol stack in the control plane. The relay UE only performs mapping between the bearer of the sidelink interface of the remote UE and the bearer of the remote UE on the Uu interface backhaul link, and does not process the adaptation layer data PDU header and PDU payload.
1. If the PDU header of the adaptation layer PDU adopts format 1, that is, if the PDU header of the adaptation layer PDU at least includes: the bearer identifier of the remote UE on the sidelink interface:
   (1) The uplink data processing flow is as follows:
      The adaptation layer of the remote UE generates the adaptation layer PDU, and delivers the adaptation layer PDU to a corresponding RLC entity according to a first mapping relationship; the first mapping relationship is the mapping relationship between the end-to-end bearer between the network device and the remote UE and the sidelink interface bearer of the remote UE;
      The relay UE receives the adaptation layer PDU, and delivers the adaptation layer PDU to the RLC entity corresponding to the Uu interface backhaul link bearer according to a second mapping relationship and the bearer identifier of the remote UE on the sidelink interface; the second mapping relationship is the mapping relationship between the sidelink interface bearer of the remote UE and the Uu interface backhaul link bearer of the remote UE;
      The network device determines the bearer identifier of the end-to-end bearer between the remote UE and the network device corresponding to the adaptation layer PDU according to the bearer identifier of the remote UE on the sidelink interface and the third mapping relationship included in the PDU header of the adaptation layer PDU, and determine a corresponding packet data convergence protocol (PDCP) entity; the third mapping relationship is the mapping relationship between the sidelink interface bearer of the remote UE and the end-to-end bearer between the remote UE and the network device.
   (2) The downlink data processing flow is as follows:
      The adaptation layer of the network device generates an adaptation layer PDU, and delivers the adaptation layer PDU to the corresponding RLC entity according to a fourth mapping relationship; the fourth mapping relationship is a mapping relationship between the end-to-end bearer between the network device and the remote UE and the Uu interface backhaul link bearer of the remote UE;
      The relay UE receives the adaptation layer PDU, determines the corresponding sidelink interface bearer according to the bearer identifier of the remote UE on the sidelink interface, and delivers the adaptation layer PDU to the RLC entity corresponding to the sidelink interface bearer;
      The remote UE receives the adaptation layer PDU, and determines the bearer identifier of the end-to-end bearer between the remote UE and the network device corresponding to the adaptation layer PDU according to the bearer identifier of the remote UE on the sidelink interface and the fifth mapping relationship included in the PDU header of the adaptation layer PDU, and determine a corresponding PDCP entity; the fifth mapping relationship is the mapping relationship between the sidelink interface bearer of the remote UE and the end-to-end bearer between the remote UE and the network device.
2. If the PDU header of the adaptation layer PDU adopts the format 2, that is, if the PDU header of the adaptation layer PDU at least includes: the identifier of the end-to-end bearer between the remote UE and the network device allocated by the network device to the remote UE:
   (1) The uplink data processing flow is as follows:
      The adaptation layer of the remote UE generates the adaptation layer PDU, and delivers the adaptation layer PDU to a corresponding RLC entity according to a sixth mapping relationship; the sixth mapping relationship is the mapping relationship between the end-to-end bearer between the network device and the remote UE and the sidelink interface bearer of the remote UE;
      The relay UE receives the adaptation layer PDU, and delivers the adaptation layer PDU to the RLC entity corresponding to the Uu interface backhaul link bearer according to a seventh mapping relationshipe; the seventh mapping relationship is the mapping relationship between the sidelink interface bearer of the remote UE and the Uu interface backhaul link bearer of the remote UE;
      The network device receives the adaptation layer PDU and determines the corresponding PDCP entity according to the bearer identifier of the end-to-end bearer between the remote UE and the network device allocated by the network device to the remote UE included in the PDU header of the adaptation layer PDU.
   (2) The downlink data processing flow is as follows:
      The adaptation layer of the network device generates an adaptation layer PDU, and delivers the adaptation layer PDU to the corresponding RLC entity according to an eighth mapping relationship; the eighth mapping relationship is a mapping relationship between the end-to-end bearer between the network device and the remote UE and the Uu interface backhaul link bearer of the remote UE;
      The relay UE receives the adaptation layer PDU, and determines the corresponding sidelink interface bearer according to the identifier of the end-to-end bearer between the remote UE and the network device allocated by the network device to the remote UE and a ninth mapping relationship, and delivers the adaptation layer PDU to the RLC entity corresponding to the sidelink interface bearer; the ninth mapping relationship is the mapping relationship between the Uu interface backhaul link bearer of the remote UE and the sidelink interface bearer of the remote UE;
      The remote UE receives the adaptation layer PDU, and determine the corresponding PDCP entity according to the identifier of the end-to-end bearer between the remote UE and the network device allocated by the network device to the remote UE included in the PDU header of the adaptation layer PDU.

Mode 2: Establishing an end-to-end adaptation layer between the relay UE and the network device.

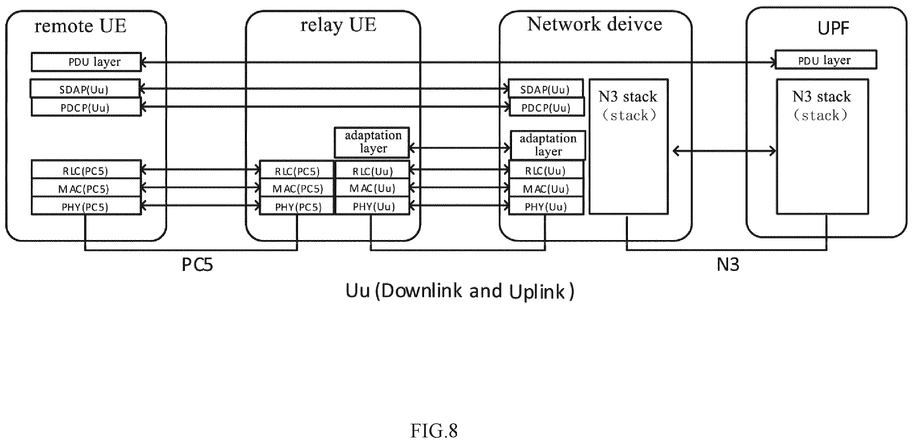

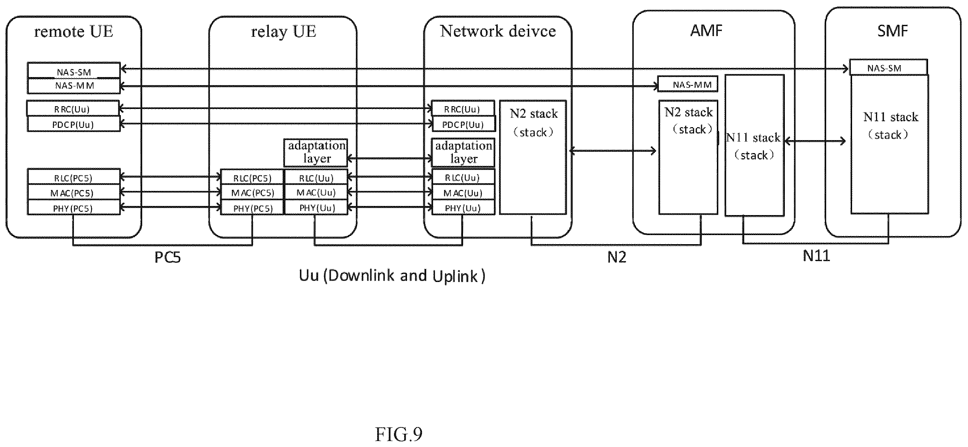

Specifically, an end-to-end adaptation layer is respectively added above the RLC layer of the relay UE and above the RLC layer of the network device. FIGS. 8 and 9 show the structure of the protocol stack after the adaptation layer is introduced. FIG. 8 shows the protocol stack on the user plane, and FIG. 9 shows the protocol stack on the control plane.
1. If the PDU header of the adaptation layer PDU adopts the format 1, that is, if the PDU header of the adaptation layer PDU at least includes: the bearer identifier of the remote UE on the sidelink interface:
   (1) The uplink data processing flow is as follows:
      The remote UE generates a PDCP PDU, and delivers the PDCP PDU to the corresponding RLC entity according to a tenth mapping relationship; the tenth mapping relationship is the mapping relationship between that the end-to-end bearer between the remote UE and the network device and the sidelink interface bearer of the remote UE;
      The relay UE generates an adaptation layer PDU according to the PDCP PDU, and delivers the adaptation layer PDU to the corresponding RLC entity according to an eleventh mapping relationship; the eleventh mapping relationship is the mapping relationship between the sidelink interface bearer of the remote UE and the Uu interface backhaul link bearer of the remote UE;
      The network device determines the bearer identifier of the end-to-end bearer between the remote UE and the network device corresponding to the adaptation layer PDU according to the bearer identifier of the remote UE on the sidelink interface and a twelfth mapping relationship included in the PDU header of the adaptation layer PDU, and determine the corresponding PDCP entity; the twelfth mapping relationship is the mapping relationship between the sidelink interface bearer of the remote UE and the end-to-end bearer between the remote UE and the network device.
2. If the PDU header of the adaptation layer PDU adopts the format 2, that is, if the PDU header of the adaptation layer PDU at least includes: the identifier of the end-to-end bearer between the remote UE and the network device allocated by the network device to the remote UE :
   (1) The uplink data processing flow is as follows:
      The adaptation layer of the network device generates an adaptation layer PDU, and delivers the adaptation layer PDU to the corresponding RLC entity according to a thirteenth mapping relationship; the thirteenth mapping relationship is the mapping relationship between the end-to-end bearer between the network device and the remote UE and the Uu interface backhaul link bearer of the remote UE;
      The relay UE receives the adaptation layer PDU, removes the adaptation layer header of the adaptation layer PDU, and obtains the data packet to be processed; determines the corresponding sidelink interface bearer according to the bearer identifier of the remote UE on the sidelink interface, and deliver the to-be-processed data packet to the RLC entity corresponding to the sidelink interface bearer;
      The remote UE receives the RLC PDU, and determines the corresponding PDCP entity according to a fourteenth mapping relationship; the fourteenth mapping relationship is the mapping relationship between the sidelink interface bearer of the remote UE and the end-to-end bearer between the remote UE and the network device.
   (2) The downlink data processing flow is as follows:
      The adaptation layer of the network device generates an adaptation layer PDU, and delivers the adaptation layer PDU to the corresponding RLC entity according to a seventeenth mapping relationship; the seventeenth mapping relationship is mapping relationship between the end-to-end bearer between the network device and the remote UE and the Uu interface backhaul link bearer of the remote UE;
      The relay UE receives the adaptation layer PDU, removes the adaptation layer header of the adaptation layer PDU, and obtains the data packet to be processed; determines the sidelink interface bearer corresponding to the remote UE according to an eighteenth mapping relationship, and delivers the to-be-processed data packet to the RLC entity corresponding to the sidelink interface bearer; the eighteenth mapping relationship is the relationship between the Uu interface backhaul link bearer of the remote UE and the sidelink interface bearer of the remote UE;
      The remote UE receives the RLC PDU, and determines the corresponding PDCP entity according to a nineteenth mapping relationship; the nineteenth mapping relationship is the mapping relationship between the sidelink interface bearer of the remote UE and the end-to-end bearer between the remote UE and the network device.

The second scenario: UE-to-UE relay scenario

For the UE-to-UE relay scenario, the PDU header of the adaptation layer PDU at least includes: end-to-end bearer identifiers of the first remote UE and the second remote UE on the sidelink interface.

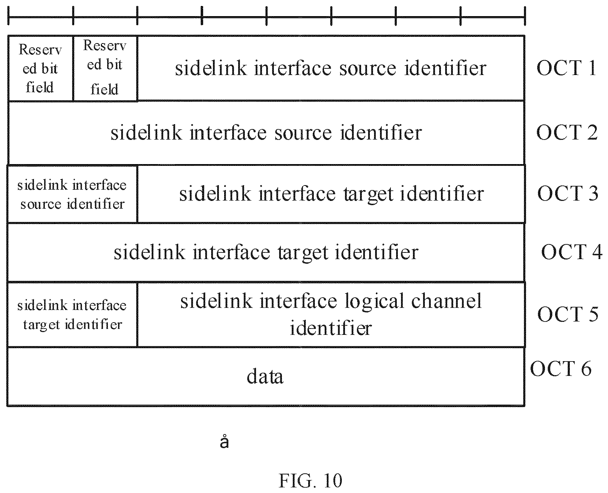

The sidelink interface refers to an end-to-end sidelink interface between the first remote UE and the second remote UE. With reference to FIG. 10, the end-to-end bearer identifiers of the first remote UE and the second remote UE on the sidelink interface include: a sidelink interface source L2 ID, a sidelink interface destination L2 ID, and a sidelink interface logical channel identifier; or, the end-to-end bearer identifiers of the first remote UE and the second remote UE on the sidelink interface include: a sidelink interface source L2 ID, a sidelink interface destination L2 ID, and a sidelink interface bearer identifier.

In the second scenario, there are two modes to design the adaptation layer:
Mode 1: Establishing an end-to-end adaptation layer between the first remote UE (remote UE1) and the second remote UE (remote UE2).

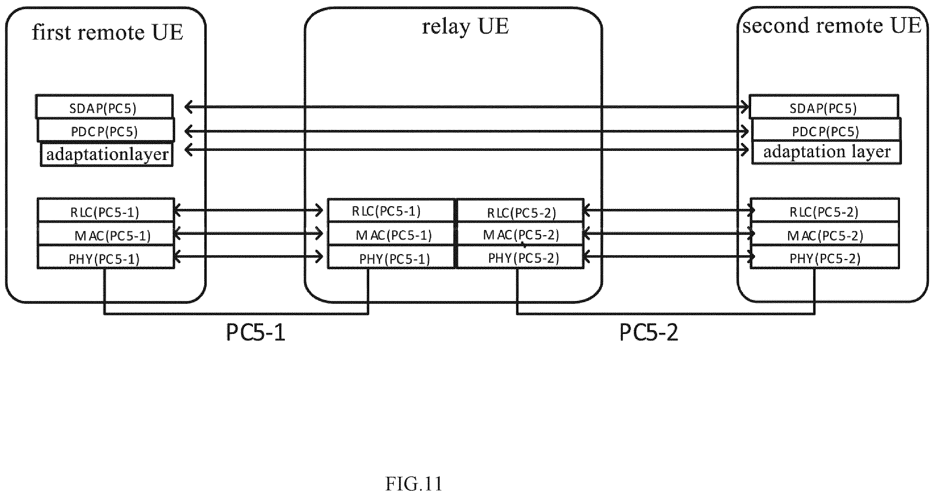

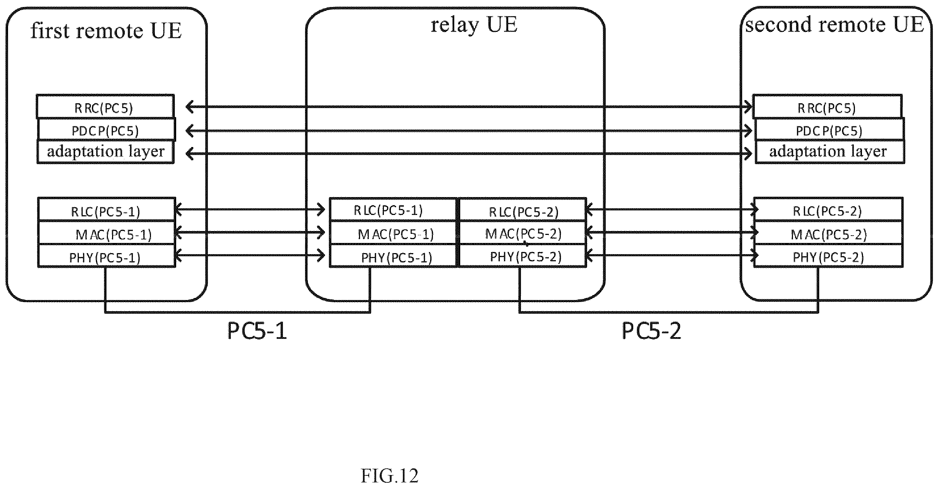

Specifically, an end-to-end adaptation layer is respectively added above the RLC layer of the first remote UE and the RLC layer of the second remote UE. FIGS. 11 and 12 show the protocol stack structure after the adaptation layer is introduced. FIG. 11 shows the protocol stack on the user plane, and FIG. 12 shows the protocol stack on the control plane. The relay UE only performs the mapping between the bearer of the sidelink interface between the first remote UE and the relay UE and the bearer of the sidelink interface between the second remote UE and the relay UE, and does not process the adaptation layer data PDU header and pay load.

In this way, the data processing flow is as follows:
The adaptation layer of the first remote UE generates an adaptation layer PDU, and determines the corresponding RLC entity when the adaptation layer PDU is transmitted between the first remote UE and the relay UE according to a twentieth mapping relationship; the twentieth mapping relationship is the mapping relationship between the sidelink end-to-end bearer between the first remote UE and the second remote UE and the sidelink interface bearer between the first remote UE and the relay UE;
The relay UE receives the adaptation layer PDU, and determines the corresponding RLC entity when the adaptation layer PDU is transmitted between the relay UE and the second remote UE according to a twenty-first mapping relationship; the twenty-first mapping relationship is a mapping relationship between the bearer of the sidelink interface between the first remote UE and the relay UE and the bearer of the sidelink interface between the relay UE and the second remote UE;
The second remote UE receives the adaptation layer PDU, and determines the corresponding the PDCP entity according to the end-to-end bearer identifiers of the first remote UE and the second remote UE on the sidelink interface included in the PDU header of the adaptation layer PDU.

Mode 2: Establishing an end-to-end adaptation layer between the relay UE and the second remote UE.

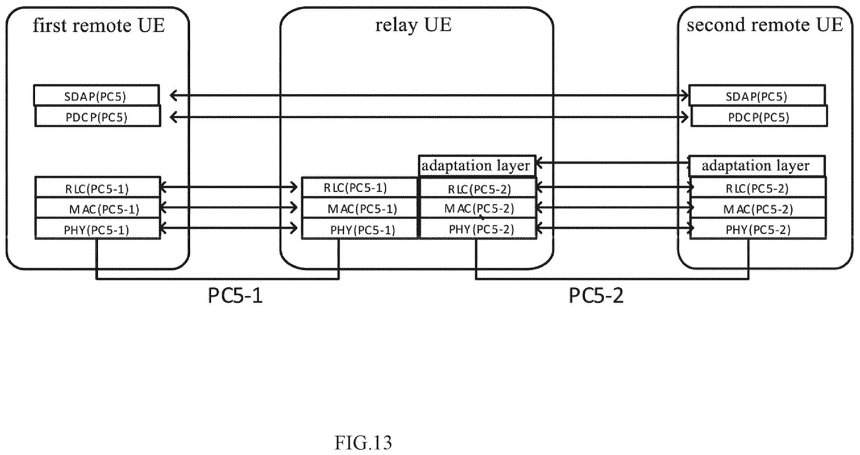

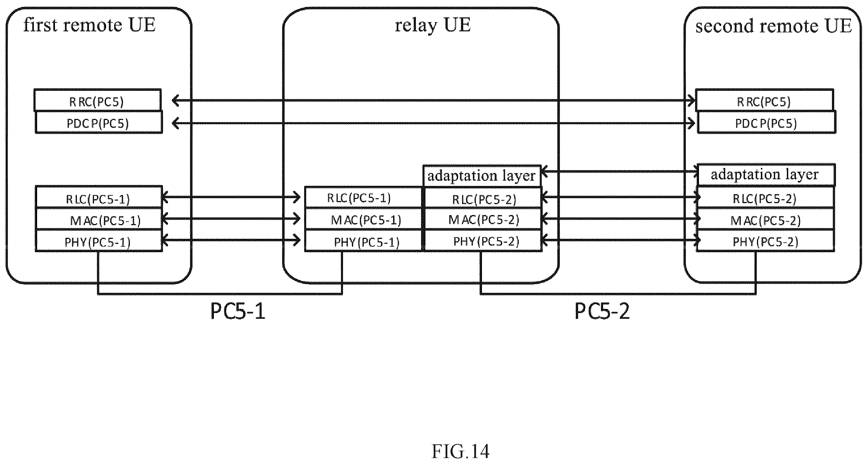

Specifically, an end-to-end adaptation layer is respectively added above the RLC layer of the relay UE and the RLC layer of the second remote UE. FIGS. 13 and 14 show the protocol stack structure after the adaptation layer is introduced. FIG. 13 shows the protocol stack on the user plane, and FIG. 14 shows the protocol stack on the control plane.

In this way, the data processing flow is as follows:
The first remote UE generates a PDCP PDU, and determines the RLC entity corresponding to the PDCP PDU according to a twenty-second mapping relationship; the twenty-second mapping relationship is the mapping relationship between the sidelink end-to-end bearer between the first remote UE and the second remote UE and the end-to-end bearer between the first remote UE and the relay UE;
The relay UE generates an adaptation layer PDU according to the PDCP PDU, and determines a corresponding RLC entity when the adaptation layer PDU is transmitted between the relay UE and the second remote UE according to a twenty-third mapping relationship; the twenty-third mapping relationship is the mapping relationship between the bearer of the sidelink interface between the first remote UE and the relay UE and the bearer of the sidelink interface between the relay UE and the second remote UE;
The second remote UE receives the adaptation layer PDU, and determines the corresponding PDCP entity according to the end-to-end bearer identifiers of the first remote UE and the second remote UE on the sidelink interface included in the PDU header of the adaptation layer PDU.

In the embodiment of the present disclosure, in the L2 relay scenario, an end-to-end adaptation layer is established, and the adaptation layer can perform functions such as routing and bearer mapping. Therefore, the solutions of the embodiments of the present disclosure are used in the L2 relay scenario, which ensured that data transmission can be normally performed between the remote UE and the network device or between two remote UEs through the relay.

In the embodiment of the present disclosure, for the UE-to-Network relay scenario, the PDU header of the adaptation layer PDU needs to include at least: the bearer identifier of the remote UE on the sidelink interface or the identifier of the end-to-end bearer between the remote UE and the network device allocated by the network device to the remote UE. For the UE-to-UE relay scenario, the PDU header of the adaptation layer PDU needs to include at least: the end-to-end bearer identifiers of the remote UE1 and the remote UE2 on the sidelink interface.

The specific implementation process of the embodiments of the present disclosure will be described in detail below with reference to different embodiments.

In one embodiment of the present disclosure, for the UE-to-Network relay scenario, the adaptation layer peer entity is located in the remote UE and the network device. In the embodiment of the present disclosure, an end-to-end adaptation layer is added above the RLC layer of the remote UE and the RLC layer of the network device. After the adaptation layer is introduced, the protocol stack structure is shown in FIG. 6 and FIG. 7, respectively. FIG. 6 shows the structure of the protocol stack on the user plane, and FIG. 7 shows the structure of the protocol stack on the control plane.

The relay UE only performs the mapping between the sidelink interface bearer of the remote UE and the Uu interface backhaul link bearer of the remote UE, and does not process the adaptation layer PDU header and the payload of the adaptation layer PDU.

In this embodiment of the present disclosure, the format of the adaptation layer PDU header can be designed in two modes:
Mode 1: The adaptation layer PDU header at least includes: a remote UE sidelink interface source L2 ID, a sidelink interface destination L2 ID, and a sidelink interface logical channel identifier. Optionally, the sidelink interface cast type identifier may also be carried. Or, the adaptation layer PDU header at least includes: a sidelink interface source L2 ID, a sidelink interface destination L2 ID, and a sidelink interface bearer identifier. Optionally, the sidelink interface cast type identifier may also be carried.

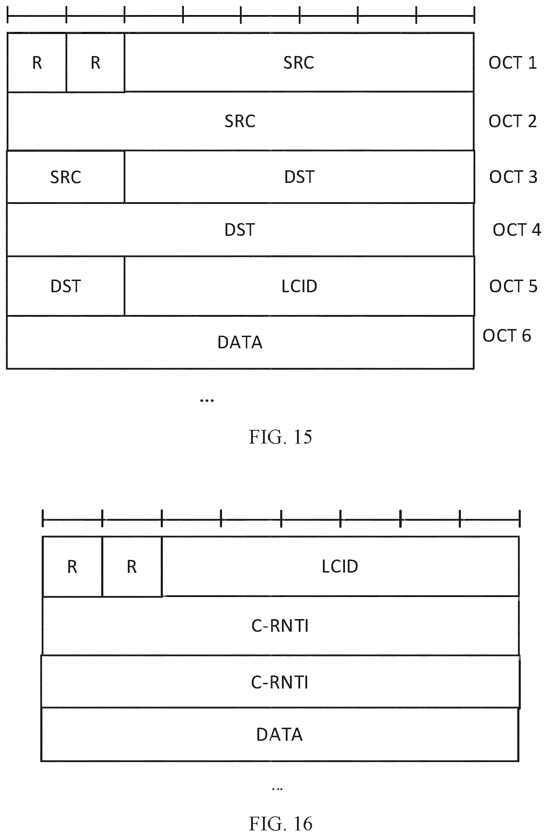

Assumptions: The reserved bits use the R identifier (occupying 2 bits), SRC is the sidelink source L2 ID (occupying 16 bits), DST is the sidelink destination L2 ID (occupying 16 bits), and logical channel identifier (LCID) is the sidelink interface logical channel identifier (occupying 6 bits), the format of the adaptation layer PDU header is shown in FIG. 15.

Mode 2: The adaptation layer PDU header at least includes: UE identification information allocated by the network device to the remote UE, and end-to-end logical channel identification information between the remote UE and the network device.

Assumptions: The reserved bits use the R identifier (occupying 2 bits), the UE identifier assigned by the network device to the remote UE is C-RNTI (occupying 16 bits), and the end-to-end logical channel identification information between the remote UE and the network device uses the LCID (occupying 6 bits), the schematic diagram of the format of the adaptation layer PDU header is shown in FIG. 16.

In the uplink direction, if the PDU header format adopts mode 1, the uplink data processing flow is as follows:
(1) The remote UE adaptation layer receives the PDCP PDU, adds the adaptation layer PDU header according to the adaptation layer PDU header format 1 to generate the adaptation layer PDU, and then delivers the adaptation layer PDU to the corresponding RLC entity according to the mapping relationship between the end-to-end bearer between the network device and the remote UE and the sidelink interface bearer of the remote UE.
(2) The relay UE does not do any processing on the adaptation layer PDU, but selects the corresponding Uu interface backhaul link bearer according to the mapping relationship between the sidelink interface bearer of the remote UE and the Uu interface backhaul link bearer of the remote UE, and then directly delivers the adaptation layer PDU to the RLC entity corresponding to the Uu interface backhaul link bearer.
(3) After receiving the adaptation layer PDU from a lower layer, the adaptation layer of the network device determines the bearer identifier of the end-to-end bearer between the remote UE and the network device corresponding to the adaptation layer PDU according to the mapping relationship between the bearer identifier of sidelink interface of the remote UE carried in the adaptation layer PDU header and the bearer identifier of sidelink interface of the remote UE maintained in the network device, and the end-to-end bearer identifier between the remote UE and the network device, so as to determine the corresponding the PDCP entity.

In the downlink direction, if the PDU header format adopts Mode 1, the downlink data processing flow is as follows:
(1) The network device adaptation layer receives the PDCP PDU, adds the adaptation layer PDU header according to the adaptation layer PDU format 1 to generate the adaptation layer PDU, and then delivers the adaptation layer PDU to the corresponding RLC entity according to the mapping relationship between the end-to-end bearer between the network device and the remote UE and the Uu interface backhaul link bearer of the remote UE.
(2) The relay UE does not perform processing on the adaptation layer PDU, but only reads the bearer identification information of the remote UE on the sidelink interface contained in the adaptation layer PDU header, and then selects the corresponding sidelink interface bearer according to the bearer identification information, and then directly delivers the adaptation layer PDU to the RLC entity corresponding to the sidelink interface bearer.
(3) After receiving the adaptation layer PDU from a lower layer, the remote UE adaptation layer determines the bearer identifier of the end-to-end bearer between the remote UE and the network device corresponding to the adaptation layer PDU according to the mapping relationship among the sidelink interface bearer identifier of the remote UE carried in the adaptation layer PDU header, the sidelink interface bearer identifier of the remote UE maintained by the remote UE, and the end-to-end bearer identifier between the remote UE and the network device, so as to determine the corresponding PDCP entity.

In the uplink direction, if the PDU header format adopts mode 2, the uplink data processing flow is as follows:
The remote UE adaptation layer receives the PDCP PDU, and adds the adaptation layer PDU header according to the adaptation layer PDU header format 2 to generate the adaptation layer PDU, and delivers the adaptation layer PDU to the corresponding RLC entity according to the mapping relationship between the end-to-end bearer between the remote UE and the network device and the sidelink interface bearer of the remote UE.

The relay UE does not perform any processing on the adaptation layer PDU, but only selects the corresponding Uu interface backhaul link bearer according to the mapping relationship between the sidelink interface bearer of the remote UE and the Uu interface backhaul link bearer of the remote UE and then directly delivers the adaptation layer PDU to the RLC entity corresponding to the Uu interface backhaul link bearer.

After receiving the adaptation layer PDU from a lower layer, the network device adaptation layer directly determines the corresponding PDCP entity according to the identifier of the end-to-end bearer between the remote UE and the network device allocated by the network device to the remote UE and carried in the adaptation layer PDU header.

In the downlink direction, if the PDU header format adopts Mode 2, the downlink data processing flow is as follows:
(1) The network device adaptation layer receives the PDCP PDU, adds the adaptation layer PDU header according to the adaptation layer PDU format 2 to generate the adaptation layer PDU, and delivers the adaptation layer PDU to the corresponding RLC entity for processing and transmission according to the mapping relationship between the end-to-end bearer between the network device and the remote UE and the Uu interface backhaul link bearer of the remote UE.
(2) The relay UE does not perform any processing on the adaptation layer PDU, but only reads the identifier of the end-to-end bearer between the remote UE and the network device that is allocated by the network device to the remote UE and contained in the adaptation layer PDU header, selects the corresponding sidelink interface bearer according to the mapping relationship between the Uu interface backhaul link bearer of the remote UE and the sidelink interface bearer, and then directly delivers the adaptation layer PDU to the RLC entity corresponding to the sidelink interface bearer.
(3) After receiving the adaptation layer PDU from the lower layer, the remote UE adaptation layer directly determines the corresponding PDCP entity according to the identifier of the end-to-end bearer between the remote UE and the network device allocated by the network device to the remote UE and carried in the adaptation layer PDU header.

In one embodiment of the present disclosure, for a UE-to-Network relay scenario, the adaptation layer peer entity is located in the relay UE and the network device. In this implementation, an end-to-end adaptation layer is added above the RLC layer of the relay UE and the RLC layer of the network device. After the adaptation layer is introduced, the protocol stack structure is shown in FIGS. 8 and 9, wherein FIG. 8 shows the structure of the protocol stack on the user plane and FIG. 9 shows the structure of the protocol stack on the control plane.

In this embodiment of the present disclosure, the format of the adaptation layer PDU header can be designed in two modes:
Mode 1: The adaptation layer PDU header at least includes: a remote UE sidelink interface source L2 ID, a sidelink interface destination L2 ID, and a sidelink interface logical channel identifier. Optionally, the sidelink interface cast type identifier may also be carried. Or, the adaptation layer PDU header at least includes: a sidelink interface source L2 ID, a sidelink interface destination L2 ID, and a sidelink interface bearer identifier. Optionally, the sidelink interface cast type identifier may also be carried.

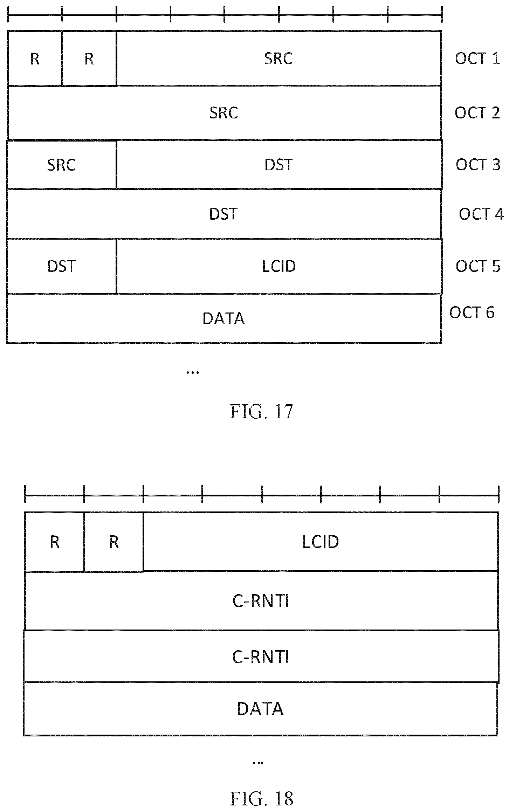

Assumptions: The reserved bits use the R identifier (occupying 2 bits), SRC is the sidelink source L2 ID (occupying 16 bits), DST is the sidelink destination L2 ID (occupying 16 bits), and logical channel identifier (LCID) is the sidelink interface logical channel identifier (occupying 6 bits), the format of the adaptation layer PDU header is shown in FIG. 17.

Mode 2: The adaptation layer PDU header at least includes: UE identification information allocated by the network device to the remote UE, and end-to-end logical channel identification information between the remote UE and the network device.

Assumptions: The reserved bits use the R identifier (occupying 2 bits), the UE identifier assigned by the network device to the remote UE is C-RNTI (occupying 16 bits), and the end-to-end logical channel identification information between the remote UE and the network device uses the LCID (occupying 6 bits), the schematic diagram of the format of the adaptation layer PDU header is shown in FIG. 18.

In the uplink direction, if the PDU header format adopts mode 1, the uplink data processing flow is as follows:
(1) The remote UE generates a PDCP PDU, then determines the corresponding RLC entity according to the mapping relationship between the end-to-end bearer between the remote UE and the network device and the sidelink interface bearer of the remote UE, and delivers the PDCP PDU the RLC entity.
(2) After receiving the data from the lower layer, the adaptation layer of the relay UE adds the adaptation layer PDU header according to the PDU header format 1 of the adaptation layer PDU to generate the adaptation layer PDU, and then determines the corresponding RLC entity according to the mapping relationship between the sidelink interface bearer of the remote UE and the Uu interface backhaul link bearer of the remote UE.
(3) After receiving the adaptation layer PDU from the lower layer, the adaptation layer of the network device determine the bearer identifier of the end-to-end bearer between the remote UE and the network device corresponding to the data according to the mapping relationship among the sidelink interface bearer identifier of the remote UE carried in the adaptation layer PDU header and the sidelink interface bearer identifier of the remote UE maintained in the network device and the end-to-end bearer identifier between the remote UE and the network device, so as to determine the corresponding PDCP entity.

In the downlink direction, if the PDU header format adopts Mode 1, the downlink data processing flow is as follows:
(1) The network device adaptation layer receives the PDCP PDU, adds the adaptation layer PDU header according to the adaptation layer PDU format 1 to generate the adaptation layer PDU, and then delivers the adaptation layer PDU to the corresponding RLC entity for processing and transmission according to the mapping relationship between the end-to-end bearer of the remote UE and the network device and the Uu interface backhaul link bearer of remote UE.
(2) After receiving the adaptation layer PDU from the lower layer, the adaptation layer of the relay UE removes the adaptation layer header, and determines the bearer used by the data on the sidelink interface according to the bearer identifier of the remote UE on the sidelink interface carried in the adaptation layer PDU header, then delivers the data packet for which the PDU header of the adaptation layer is removed to the RLC entity corresponding to the sidelink interface bearer.
(3) After the remote UE receives the RLC PDU, the PDCP entity corresponding to the RLC PDU can be determined according to the mapping relationship between the sidelink interface bearer of the remote UE and the end-to-end bearer between the remote UE and the network device.

In the uplink direction, if the PDU header format adopts mode 2, the uplink data processing flow is as follows:
(1) The remote UE generates a PDCP PDU, then determines the corresponding RLC entity according to the mapping relationship between the end-to-end bearer between the remote UE and the network device and the sidelink interface bearer of the remote UE, and delivers the PDCP PDU the RLC entity.
(2) After receiving the data from the lower layer, the adaptation layer of the relay UE adds the adaptation layer PDU header according to the PDU header format 2 of the adaptation layer PDU, generates the adaptation layer PDU, and then determines the corresponding RLC entity according to the mapping relationship between the sidelink interface bearer of the remote UE and the Uu interface backhaul link bearer of the remote UE, and then delivers the adaptation layer PDU to the RLC entity.
(3) After receiving the adaptation layer PDU from the lower layer, the network device adaptation layer determines the corresponding PDCP entity according to the end-to-end bearer identifier between the remote UE and the network device carried in the adaptation layer PDU header.

In the downlink direction, if the PDU header format adopts Mode 2, the downlink data processing flow is as follows:
(1) The network device adaptation layer receives the PDCP PDU, adds the adaptation layer PDU header according to the adaptation layer PDU format 2 to generate the adaptation layer PDU, and then delivers the adaptation layer PDU to the corresponding RLC entity for processing and transmission according to the mapping relationship between the end-to-end bearer between the network device and the remote UE and the Uu interface backhaul link bearer of the remote UE.
(2) After receiving the adaptation layer PDU from the lower layer, the adaptation layer of the relay UE removes the adaptation layer header, and determines the remote UE according to the remote UE identifier carried in the adaptation layer PDU header, and then determines the bearer used by the data on the sidelink interface according to the mapping relationship between the Uu interface backhaul link bearer of the remote UE and the sidelink interface bearer of the remote UE, and then delivers the data packet for which the PDU header of the adaptation layer is removed to the RLC entity corresponding to the sidelink interface bearer.
(3) After the remote end receives the RLC PDU, the PDCP entity corresponding to the RLC PDU can be determined according to the mapping relationship between the sidelink interface bearer of the remote UE and the end-to-end bearer between the remote UE and the network device.

In one embodiment of the present disclosure, for the UE-to-UE relay, the adaptation layer peer entity is located between the remote UE1 (the first terminal UE) and the remote UE2 (the second terminal UE). In the implementation of the present disclosure, an end-to-end adaptation layer is added above the RLC layer of the remote UE1 and the remote UE2. After the adaptation layer is introduced, the protocol stack structure is shown in FIG. 10 and FIG. 11, wherein, FIG. 10 shows the structure of the protocol stack on the user plane, FIG. 11 shows the structure of the protocol stack on the control plane. The relay UE only performs the mapping of the bearer of the sidelink interface between the remote UE1 and the relay UE and the bearer of the sidelink interface between the remote UE2 and the relay UE, and does not process the adaptation layer data PDU header and payload.

The format of the adaptation layer PDU header can be as follows:
The adaptation layer PDU header at least includes: a remote UE sidelink interface source L2 ID, a sidelink interface destination L2 ID, and a sidelink interface logical channel identifier. Optionally, the sidelink interface cast type identifier may also be carried. Or the adaptation layer PDU header at least includes: the sidelink interface source L2 ID, the sidelink interface destination L2 ID, and the sidelink interface bearer identifier. Optionally, the sidelink interface cast type identifier may also be carried.

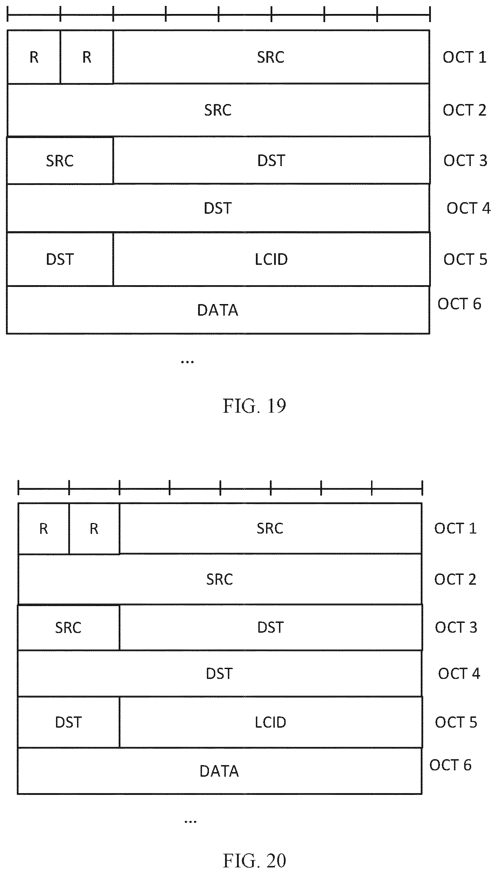

Assuming: the reserved bits use the R identifier (occupying 2 bits), SRC is the sidelink source L2 ID (occupying 16 bits), DST is the sidelink destination L2 ID (occupying 16 bits), and LCID is the sidelink interface logical channel identifier (occupying 6 bits), then the PDU header format of the adaptation layer is shown in FIG. 19.

In the embodiment of the present disclosure, the data transmission process on the relayed sidelink interface is as follows:
(1) The adaptation layer of the remote UE1 receives the PDCP PDU, and adds the adaptation layer PDU header according to the adaptation layer PDU header format 1 to generate the adaptation layer PDU, and then determines the corresponding RLC entity when the PDCP PDU is transmitted between the remote UE1 and the relay UE according to the mapping relationship between the sidelink end-to-end bearer between the remote UE1 and the remote UE2 and the sidelink interface bearer between the remote UE1 and the relay UE.
(2) The relay UE does not perform any processing on the adaptation layer PDU, but only selects the RLC entity corresponding to the adaptation layer PDU when the sidelink interface transmission is performed between the relay UE and the remote UE2 according to the mapping relationship between the bearer of the sidelink interface between the remote UE1 and the relay UE and the bearer of the sidelink interface between the relay UE and the remote UE2.
(3) After receiving the adaptation layer PDU from the lower layer, the adaptation layer of the remote UE2 directly determines the corresponding PDCP entity according to the bearer identifier of the sidelink end-to-end bearer between the remote UE1 and the remote UE2 carried in the adaptation layer PDU header,.

In one embodiment of the present disclosure, for a UE-to-UE relay, the adaptation layer peer entity is located between the relay and the remote UE2. In this embodiment, an end-to-end adaptation layer is added above the RLC layer of the relay UE and the remote UE2. After the adaptation layer is introduced, the protocol stack structure is shown in FIGS. 13 and 14, wherein FIG. 13 shows the structure of the protocol stack on the user plane, FIG. 14 shows the structure of the protocol stack on the control plane.

In this embodiment of the present disclosure, the format of the adaptation layer PDU header may be as follows:
The adaptation layer PDU header at least includes: the remote UE sidelink interface source L2 ID, the sidelink interface destination L2 ID, and the sidelink interface logical channel identifier. Optionally, the sidelink interface cast type identifier may also be carried. Or the adaptation layer PDU header at least includes: the sidelink interface source L2 ID, the sidelink interface destination L2 ID, and the sidelink interface bearer identifier. Optionally, the sidelink interface cast type identifier may also be carried.

Assuming: the reserved bits use the R identifier (occupying 2 bits), SRC is the sidelink source L2 ID (occupying 16 bits), DST is the sidelink destination L2 ID (occupying 16 bits), and LCID is the sidelink interface logical channel identifier (occupying 6 bits), then the PDU header format of the adaptation layer is shown in FIG. 20.

The data transmission process of the relayed sidelink interface is as follows:
(1) The remote UE1 generates a PDCP PDU, and the remote UE1 determines the RLC entity corresponding to the PDCP PDU according to the mapping relationship between the sidelink end-to-end bearer between the remote UE1 and the remote UE2 and the end-to-end bearer between the remote UE1 and the relay UE.
(2) The relay UE receives the RLC PDU, adds the adaptation layer PDU header according to the PDU header format of the adaptation layer PDU, generates the adaptation layer PDU, and then determines the corresponding RLC entity when the adaptation layer PDU is transmitted between the relay UE and the remote UE2 according to the mapping relationship between the sidelink interface bearer between remote UE1 and the relay UE and the sidelink interface bearer between the relay UE and the remote UE2.
(3) After receiving the adaptation layer PDU from the lower layer, the adaptation layer of the remote UE2 directly determines the corresponding PDCP entity according to the bearer identifiers of the sidelink end-to-end bearer between the remote UE1 and the remote UE2 carried in the adaptation layer PDU header.

It can be seen from the above that a method for designing an adaptation layer PDU in a relay scenario is provided in the embodiments of the present disclosure, thereby improving the protocol process and ensuring that the data transmission is performed normally through the relay between the remote UE and the network device or between two remote UEs.

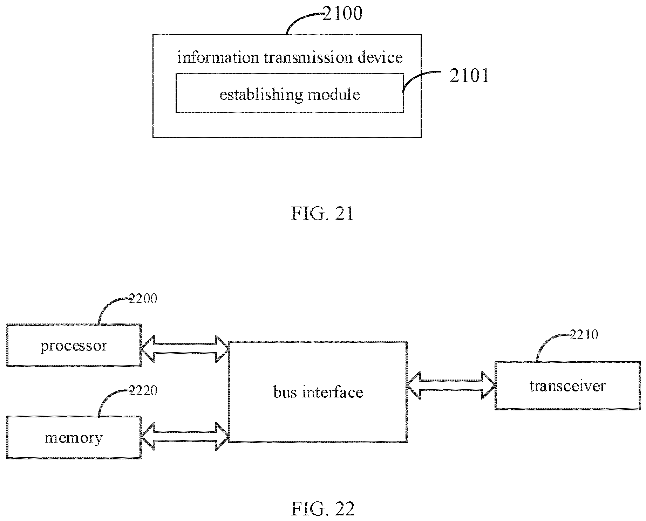

Embodiments of the present disclosure also provide an information transmission device. FIG. 21 is a structural diagram of a terminal device provided by an embodiment of the present disclosure. Since the principle of the information transmission device for solving the problem is similar to the information transmission method in the embodiment of the present disclosure, the implementation of the information transmission device may refer to the implementation of the method, and the repetition will not be repeated.

As shown in FIG. 21, the information transmission device 2100 includes: a establishing module 2101, configured to establish an end-to-end adaptation layer in an L2 relay scenario; wherein, the functions of the adaptation layer include one or a combination of the following: routing, bearer mapping.

For the design of the adaptation layer and the format of the PDU of the adaptation layer, reference may be made to the descriptions in the foregoing embodiments.

For the UE-to-Network relay scenario, the establishing module 2101 is specifically configured to establish an end-to-end adaptation layer between a remote UE and a network device; or, establish an end-to-end adaptation layer between a relay UE and a network device.

Specifically, the establishing module 2101 is specifically configured to add the end-to-end adaptation layer above the RLC layer of the remote UE and above the RLC layer of the network device, respectively.

Optionally, the device may be located in a remote UE. At this time, if the PDU header of the adaptation layer PDU at least includes: the bearer identifier of the remote UE on the sidelink interface: the device may further include: a first processing module, configured to, in an uplink direction, generate adaptation layer PDU for the adaptation layer of the remote UE, and deliver the adaptation layer PDU to a corresponding RLC entity according to a first mapping relationship; the first mapping relationship is the mapping relationship between the end-to-end bearer between the network device and the remote UE and the sidelink interface bearer of the remote UE; in a downlink direction, receive the adaptation layer PDU from the relay UE, and determine the bearer identifier of the end-to-end bearer between the remote UE and the network device corresponding to the adaptation layer PDU according to the bearer identifier of the remote UE on the sidelink interface and the fifth mapping relationship included in the PDU header of the adaptation layer PDU, and determine a corresponding PDCP entity; the fifth mapping relationship is the mapping relationship between the sidelink interface bearer of the remote UE and the end-to-end bearer between the remote UE and the network device.

Optionally, the device is located in the relay UE. At this time, if the PDU header of the adaptation layer PDU at least includes: the bearer identifier of the remote UE on the sidelink interface: the device may further include: a second processing module, configured to, in the uplink direction, receive the adaptation layer PDU from the remote UE, and deliver the adaptation layer PDU to an RLC entity corresponding to the Uu interface backhaul link bearer according to a second mapping relationship and the bearer identifier of the remote UE on the sidelink interface; the second mapping relationship is the mapping relationship between the sidelink interface bearer of the remote UE and the Uu interface backhaul link bearer of the remote UE; in the downlink direction, receive the adaptation layer PDU from the network device, determine the corresponding sidelink interface bearer according to the bearer identifier of the remote UE on the sidelink interface, and deliver the adaptation layer PDU to the RLC entity corresponding to the sidelink interface bearer;

Optionally, the device may be located in a network device. At this time, if the PDU header of the adaptation layer PDU at least includes: the bearer identifier of the remote UE on the sidelink interface: the device may further include: a third processing module, configured to, in the uplink direction, determine the bearer identifier of the end-to-end bearer between the remote UE and the network device corresponding to the adaptation layer PDU according to the bearer identifier of the remote UE on the sidelink interface and the third mapping relationship included in the PDU header of the adaptation layer PDU, and determine a corresponding packet data convergence protocol (PDCP) entity; the third mapping relationship is the mapping relationship between the sidelink interface bearer of the remote UE and the end-to-end bearer between the remote UE and the network device; in the downlink direction, generate an adaptation layer PDU, and deliver the adaptation layer PDU to the corresponding RLC entity according to a fourth mapping relationship; the fourth mapping relationship is a mapping relationship between the end-to-end bearer between the network device and the remote UE and the Uu interface backhaul link bearer of the remote UE;

Optionally, the device may be located in a remote UE. At this time, if the PDU header of the adaptation layer PDU at least includes: the identifier of the end-to-end bearer between the remote UE and the network device allocated by the network device to the remote UE: the device may further include: a fourth processing module, configured to, in the uplink direction, generate the adaptation layer PDU, and deliver the adaptation layer PDU to a corresponding RLC entity according to a sixth mapping relationship; the sixth mapping relationship is the mapping relationship between the end-to-end bearer between the network device and the remote UE and the sidelink interface bearer of the remote UE; in the downlink direction, receive the adaptation layer PDU from the relay UE, and determine the corresponding PDCP entity according to the identifier of the end-to-end bearer between the remote UE and the network device allocated by the network device to the remote UE included in the PDU header of the adaptation layer PDU.

Optionally, the device may be located in the relay UE. At this time, if the PDU header of the adaptation layer PDU at least includes: the identifier of the end-to-end bearer between the remote UE and the network device allocated by the network device to the remote UE: the device may further include: a fifth processing module, configured to, in the uplink direction, receive the adaptation layer PDU from the remote UE, and deliver the adaptation layer PDU to the RLC entity corresponding to the Uu interface backhaul link bearer according to a seventh mapping relationship; the seventh mapping relationship is the mapping relationship between the sidelink interface bearer of the remote UE and the Uu interface backhaul link bearer of the remote UE; in the downlink direction, receive the adaptation layer PDU from the network device, and determine the corresponding sidelink interface bearer according to the identifier of the end-to-end bearer between the remote UE and the network device allocated by the network device to the remote UE and a ninth mapping relationship, and delivers the adaptation layer PDU to the RLC entity corresponding to the sidelink interface bearer; the ninth mapping relationship is the mapping relationship between the Uu interface backhaul link bearer of the remote UE and the sidelink interface bearer of the remote UE;

Optionally, the device may be located in a network device. At this time, if the PDU header of the adaptation layer PDU at least includes: the identifier of the end-to-end bearer between the remote UE and the network device allocated by the network device to the remote UE: the device may further include: a sixth processing module, configured to, in the uplink direction, receive the adaptation layer PDU from the relay UE, determine the corresponding PDCP entity according to the bearer identifier of the end-to-end bearer between the remote UE and the network device allocated by the network device to the remote UE included in the PDU header of the adaptation layer PDU; in the downlink direction, generate the adaptation layer PDU, and deliver the adaptation layer PDU to the corresponding RLC entity according to an eighth mapping relationship; the eighth mapping relationship is a mapping relationship between the end-to-end bearer between the network device and the remote UE and the Uu interface backhaul link bearer of the remote UE.

Specifically, the establishing module 2101 is configured to add an end-to-end adaptation layer above the RLC layer of the relay UE and above the RLC layer of the network device respectively.

Optionally, the device may be located in a remote UE. If the PDU header of the adaptation layer PDU at least includes: the bearer identifier of the remote UE on the sidelink interface, the device may further include: a seventh processing module, configured to, in the uplink direction, generate a PDCP PDU, and deliver the PDCP PDU to the corresponding RLC entity according to a tenth mapping relationship; the tenth mapping relationship is the mapping relationship between that the end-to-end bearer between the remote UE and the network device and the sidelink interface bearer of the remote UE; in the downlink direction, receive the RLC PDU from the relay UE, and determine the corresponding PDCP entity according to a fourteenth mapping relationship; the fourteenth mapping relationship is the mapping relationship between the sidelink interface bearer of the remote UE and the end-to-end bearer between the remote UE and the network device.

Optionally, the device may be located in the relay UE. If the PDU header of the adaptation layer PDU at least includes: the bearer identifier of the remote UE on the sidelink interface, the device may further include: an eighth processing module, configured to, in the uplink direction, generate an adaptation layer PDU according to the PDCP PDU transmitted from the remote UE, and deliver the adaptation layer PDU to the corresponding RLC entity according to an eleventh mapping relationship; the eleventh mapping relationship is the mapping relationship between the sidelink interface bearer of the remote UE and the Uu interface backhaul link bearer of the remote UE; in the downlink direction, receive the adaptation layer PDU from the network device, remove the adaptation layer header of the adaptation layer PDU, and obtain the data packet to be processed; determine the corresponding sidelink interface bearer according to the bearer identifier of the remote UE on the sidelink interface, and deliver the to-be-processed data packet to the RLC entity corresponding to the sidelink interface bearer.

Optionally, the device may be located in the network device. If the PDU header of the adaptation layer PDU at least includes: the bearer identifier of the remote UE on the sidelink interface, the device may further include: a ninth processing module, configured to, in the uplink direction, determine the bearer identifier of the end-to-end bearer between the remote UE and the network device corresponding to the adaptation layer PDU according to the bearer identifier of the remote UE on the sidelink interface and a twelfth mapping relationship included in the PDU header of the adaptation layer PDU, and determine the corresponding PDCP entity; the twelfth mapping relationship is the mapping relationship between the sidelink interface bearer of the remote UE and the end-to-end bearer between the remote UE and the network device; in the downlink direction, generate the adaptation layer PDU, and deliver the adaptation layer PDU to the corresponding RLC entity according to a thirteenth mapping relationship; the thirteenth mapping relationship is the mapping relationship between the end-to-end bearer between the network device and the remote UE and the Uu interface backhaul link bearer of the remote UE.

Optionally, the device may be located in a remote UE. If the PDU header of the adaptation layer PDU at least includes: the identifier of the end-to-end bearer between the remote UE and the network device allocated by the network device to the remote UE: the device may further include: a tenth processing module, configured to, in the uplink direction, generate the PDCP PDU, and deliver the PDCP PDU to the corresponding RLC entity according to a fifteenth mapping relationship; the fifteenth mapping relationship is the mapping relationship between the end-to-end bearer between the remote UE and the network device and the sidelink interface bearer of the remote UE; in the downlink direction, receive the RLC PDU from the relay UE, determine the corresponding PDCP entity according to a nineteenth mapping relationship; the nineteenth mapping relationship is the mapping relationship between the sidelink interface bearer of the remote UE and the end-to-end bearer between the remote UE and the network device.

Optionally, the device may be located in the relay UE. If the PDU header of the adaptation layer PDU at least includes: the identifier of the end-to-end bearer between the remote UE and the network device allocated by the network device to the remote UE: the device may further include: an eleventh processing module, configured to, in the uplink direction, generate an adaptation layer PDU according to the PDCP PDU of the remote UE, and deliver the adaptation layer PDU to the RLC entity corresponding to the Uu interface backhaul link bearer according to a sixteenth mapping relationship; the sixteenth mapping relationship is the mapping relationship between the sidelink interface bearer of the remote UE and the bearer of the remote UE on the backhaul link of the Uu interface; in the downlink direction, receive the adaptation layer PDU of the network device, remove the adaptation layer header of the adaptation layer PDU, and obtain the data packet to be processed; determine the sidelink interface bearer corresponding to the remote UE according to an eighteenth mapping relationship, and delivers the to-be-processed data packet to the RLC entity corresponding to the sidelink interface bearer; the eighteenth mapping relationship is the relationship between the Uu interface backhaul link bearer of the remote UE and the sidelink interface bearer of the remote UE.

Alternatively, the device may be located in a network device. If the PDU header of the adaptation layer PDU at least includes: the identifier of the end-to-end bearer between the remote UE and the network device allocated by the network device to the remote UE: the device may further include: a twelfth processing module, configured to, in the uplink direction, determine the corresponding PDCP entity according to the identifier of the end-to-end bearer between the remote UE and the network device allocated by the network device to the remote UE and contained in the PDU header of the adaptation layer PDU sent by the relay UE; in the downlink direction, generate an adaptation layer PDU, and deliver the adaptation layer PDU to the corresponding RLC entity according to a seventeenth mapping relationship; the seventeenth mapping relationship is mapping relationship between the end-to-end bearer between the network device and the remote UE and the Uu interface backhaul link bearer of the remote UE.

For the UE-to-UE relay scenario, the establishing module 2101 is configured to establish an end-to-end adaptation layer between the first remote UE and the second remote UE; or establish an end-to-end adaptation layer between the second remote UEs.

Specifically, the establishing module 2101 is configured to add an end-to-end adaptation layer above the RLC layer of the first remote UE and above the RLC layer of the second remote UE respectively.

Optionally, the device may be located in the first remote UE. At this time, the device may further include: a thirteenth processing module, configured to generate an adaptation layer PDU, and determine the corresponding RLC entity when the adaptation layer PDU is transmitted between the first remote UE and the relay UE according to a twentieth mapping relationship; the twentieth mapping relationship is the mapping relationship between the sidelink end-to-end bearer between the first remote UE and the second remote UE and the sidelink interface bearer between the first remote UE and the relay UE.

Optionally, the device may be located in the relay remote UE. At this time, the apparatus may further include: a fourteenth processing module, configured to receive the adaptation layer PDU, and determine the corresponding RLC entity when the adaptation layer PDU is transmitted between the relay UE and the second remote UE according to a twenty-first mapping relationship; the twenty-first mapping relationship is a mapping relationship between the bearer of the sidelink interface between the first remote UE and the relay UE and the bearer of the sidelink interface between the relay UE and the second remote UE.

Optionally, the device may be located in the second remote UE. At this time, the device may further include: a fifteenth processing module, configured to receive the adaptation layer PDU, and determine the corresponding the PDCP entity according to the end-to-end bearer identifiers of the first remote UE and the second remote UE on the sidelink interface included in the PDU header of the adaptation layer PDU.

Specifically, the establishing module 2101 is configured to add an end-to-end adaptation layer above the RLC layer of the relay UE and above the RLC layer of the second remote UE, respectively.

Optionally, the device may be located in the first remote UE. At this time, the device may further include: a sixteenth processing module, configured to generate the PDCP PDU, and determines the RLC entity corresponding to the PDCP PDU according to a twenty-second mapping relationship; the twenty-second mapping relationship is the mapping relationship between the sidelink end-to-end bearer between the first remote UE and the second remote UE and the end-to-end bearer between the first remote UE and the relay UE;

Optionally, the device may be located in the relay remote UE. At this time, the device may further include: a seventeenth processing module, configured to generate an adaptation layer PDU according to the PDCP PDU, and determine a corresponding RLC entity when the adaptation layer PDU is transmitted between the relay UE and the second remote UE according to a twenty-third mapping relationship; the twenty-third mapping relationship is the mapping relationship between the bearer of the sidelink interface between the first remote UE and the relay UE and the bearer of the sidelink interface between the relay UE and the second remote UE.

Optionally, the device may be located in the second remote UE. At this time, the device may further include: an eighteenth processing module, configured to receives the adaptation layer PDU, and determine the corresponding PDCP entity according to the end-to-end bearer identifiers of the first remote UE and the second remote UE on the sidelink interface included in the PDU header of the adaptation layer PDU.

The device provided by the embodiment of the present disclosure can execute the foregoing method embodiments, and the implementation principles and technical effects thereof are similar, and details are not described herein again in this embodiment.

The embodiment of FIG. 22 is not covered by the claimed invention.

As shown in FIG. 22, the information transmission device according to the embodiment of the present disclosure includes: a processor 2200, configured to read a program in a memory 2220, and perform the following processes:
establishing an end-to-end adaptation layer in an L2 relay scenario; wherein, the functions of the adaptation layer include one or a combination of the following: routing, bearer mapping.

The transceiver 2210 is used to receive and transmit data under the control of the processor 2200.

In FIG. 22, the bus architecture may include any number of interconnected buses and bridges, specifically various circuits of one or more processors represented by processor 2200 and memory represented by memory 2220 are linked together. The bus architecture may also link together various other circuits, such as peripherals, voltage regulators, and power management circuits, which are well known in the art and, therefore, will not be described further herein. The bus interface provides the interface. Transceiver 2210 may be a number of elements, including a transmitter and a receiver that provide a means for communicating with various other devices over a transmission medium. The processor 2200 is responsible for managing the bus architecture and general processing, and the memory 2220 may store data used by the processor 2200 in performing operations.

The processor 2200 is responsible for managing the bus architecture and general processing, and the memory 2220 may store data used by the processor 2200 in performing operations.

Wherein, for the UE-to-Network relay scenario, the PDU header of the adaptation layer PDU at least includes: a bearer identifier of the remote UE on the sidelink interface, or an identifier of the end-to-end bearer between the remote UE and the network device allocated by the network device to the remote UE;
For the UE-to-UE relay scenario, the PDU header of the adaptation layer PDU at least includes: end-to-end bearer identifiers of the first remote UE and the second remote UE on the sidelink interface.

Wherein, the bearer identifier of the remote UE on the sidelink interface includes: a sidelink interface source L2 ID, a sidelink interface destination L2 ID, a sidelink interface logical channel identifier; or, the bearer identifier of the remote UE on the sidelink interface includes: the sidelink interface source L2 ID, the sidelink interface destination L2 ID, the sidelink interface bearer identifier;
The end-to-end bearer identifiers of the first remote UE and the second remote UE on the sidelink interface include: a sidelink interface source L2 ID, a sidelink interface destination L2 ID, and a sidelink interface logical channel identifier; or, the end-to-end bearer identifiers of the first remote UE and the second remote UE on the sidelink interface include: a sidelink interface source L2 ID, a sidelink interface destination L2 ID, and a sidelink interface bearer identifier.

Wherein, the PDU header of the adaptation layer PDU further includes a sidelink interface cast type identifier.

Wherein, the identifier of the end-to-end bearer between the remote UE and the network device allocated by the network device to the remote UE includes: UE identification information allocated by the network device to the remote UE, the end-to-end logical channel identifier between the remote UE and the network device; or,
The identifier of the end-to-end bearer between the remote UE and the network device allocated by the network device to the remote UE includes: UE identification information allocated by the network device to the remote UE, an identifier of the end-to-end bearer between the remote UE and the network device.

For the UE-to-Network relay scenario, the processor 2200 is further configured to read program instructions in the memory and perform the following operations:
establishing an end-to-end adaptation layer between a remote UE and a network device; or,
establishing an end-to-end adaptation layer between a relay UE and a network device.

The processor 2200 is further configured to read the program and perform the following steps:
adding the end-to-end adaptation layer above the RLC layer of the remote UE and above the RLC layer of the network device, respectively.

If the PDU header of the adaptation layer PDU at least includes: the bearer identifier of the remote UE on the sidelink interface:
If the device is applied to a remote UE, the processor 2200 is further configured to read program instructions in the memory and perform the following operations:
in an uplink direction, generating adaptation layer PDU for the adaptation layer of the remote UE, and delivering the adaptation layer PDU to a corresponding RLC entity according to a first mapping relationship; the first mapping relationship being the mapping relationship between the end-to-end bearer between the network device and the remote UE and the sidelink interface bearer of the remote UE;
in a downlink direction, receiving the adaptation layer PDU from the relay UE, and determine the bearer identifier of the end-to-end bearer between the remote UE and the network device corresponding to the adaptation layer PDU according to the bearer identifier of the remote UE on the sidelink interface and the fifth mapping relationship included in the PDU header of the adaptation layer PDU, and determining a corresponding PDCP entity; the fifth mapping relationship being the mapping relationship between the sidelink interface bearer of the remote UE and the end-to-end bearer between the remote UE and the network device.

If the device is applied to a relay UE, the processor 2200 is further configured to read program instructions in the memory and perform the following operations:
in the uplink direction, receiving the adaptation layer PDU from the remote UE, and deliver the adaptation layer PDU to an RLC entity corresponding to the Uu interface backhaul link bearer according to a second mapping relationship and the bearer identifier of the remote UE on the sidelink interface; the second mapping relationship being the mapping relationship between the sidelink interface bearer of the remote UE and the Uu interface backhaul link bearer of the remote UE;
in the downlink direction, receiving the adaptation layer PDU from the network device, determining the corresponding sidelink interface bearer according to the bearer identifier of the remote UE on the sidelink interface, and delivering the adaptation layer PDU to the RLC entity corresponding to the sidelink interface bearer;

If the device is applied to a network device, the processor 2200 is further configured to read program instructions in the memory and perform the following operations:
in the uplink direction, determining the bearer identifier of the end-to-end bearer between the remote UE and the network device corresponding to the adaptation layer PDU according to the bearer identifier of the remote UE on the sidelink interface and the third mapping relationship included in the PDU header of the adaptation layer PDU, and determining a corresponding packet data convergence protocol (PDCP) entity; the third mapping relationship being the mapping relationship between the sidelink interface bearer of the remote UE and the end-to-end bearer between the remote UE and the network device;
in the downlink direction, generating an adaptation layer PDU, and delivering the adaptation layer PDU to the corresponding RLC entity according to a fourth mapping relationship; the fourth mapping relationship being a mapping relationship between the end-to-end bearer between the network device and the remote UE and the Uu interface backhaul link bearer of the remote UE;

If the PDU header of the adaptation layer PDU at least includes: the identifier of the end-to-end bearer between the remote UE and the network device allocated by the network device to the remote UE:
If the device is applied to a remote UE, the processor 2200 is further configured to read program instructions in the memory and perform the following operations:
in the uplink direction, generating the adaptation layer PDU, and delivering the adaptation layer PDU to a corresponding RLC entity according to a sixth mapping relationship; the sixth mapping relationship being the mapping relationship between the end-to-end bearer between the network device and the remote UE and the sidelink interface bearer of the remote UE;
in the downlink direction, receiving the adaptation layer PDU from the relay UE, and determining the corresponding PDCP entity according to the identifier of the end-to-end bearer between the remote UE and the network device allocated by the network device to the remote UE included in the PDU header of the adaptation layer PDU.

If the device is applied to a relay UE, the processor 2200 is further configured to read program instructions in the memory and perform the following operations:
in the uplink direction, receiving the adaptation layer PDU from the remote UE, and deliver the adaptation layer PDU to the RLC entity corresponding to the Uu interface backhaul link bearer according to a seventh mapping relationship; the seventh mapping relationship being the mapping relationship between the sidelink interface bearer of the remote UE and the Uu interface backhaul link bearer of the remote UE;
in the downlink direction, receive the adaptation layer PDU from the network device, and determining the corresponding sidelink interface bearer according to the identifier of the end-to-end bearer between the remote UE and the network device allocated by the network device to the remote UE and a ninth mapping relationship, and delivering the adaptation layer PDU to the RLC entity corresponding to the sidelink interface bearer; the ninth mapping relationship being the mapping relationship between the Uu interface backhaul link bearer of the remote UE and the sidelink interface bearer of the remote UE;

If the device is applied to a network device, the processor 2200 is further configured to read program instructions in the memory and perform the following operations:
in the uplink direction, receiving the adaptation layer PDU from the relay UE, determining the corresponding PDCP entity according to the bearer identifier of the end-to-end bearer between the remote UE and the network device allocated by the network device to the remote UE included in the PDU header of the adaptation layer PDU;
in the downlink direction, generating the adaptation layer PDU, and delivering the adaptation layer PDU to the corresponding RLC entity according to an eighth mapping relationship; the eighth mapping relationship being a mapping relationship between the end-to-end bearer between the network device and the remote UE and the Uu interface backhaul link bearer of the remote UE.

Wherein, the processor 2200 is further configured to read program instructions in the memory and perform the following operations:
Adding an end-to-end adaptation layer above the RLC layer of the relay UE and above the RLC layer of the network device.

If the PDU header of the adaptation layer PDU at least includes: the bearer identifier of the remote UE on the sidelink interface:
If the device is applied to a remote UE, the processor 2200 is further configured to read program instructions in the memory and perform the following operations:
in the uplink direction, generating a PDCP PDU, and delivering the PDCP PDU to the corresponding RLC entity according to a tenth mapping relationship; the tenth mapping relationship being the mapping relationship between that the end-to-end bearer between the remote UE and the network device and the sidelink interface bearer of the remote UE;
in the downlink direction, receiving the RLC PDU from the relay UE, and determining the corresponding PDCP entity according to a fourteenth mapping relationship; the fourteenth mapping relationship being the mapping relationship between the sidelink interface bearer of the remote UE and the end-to-end bearer between the remote UE and the network device.

If the device is applied to a relay UE, the processor 2200 is further configured to read program instructions in the memory and perform the following operations:
in the uplink direction, generating an adaptation layer PDU according to the PDCP PDU transmitted from the remote UE, and delivering the adaptation layer PDU to the corresponding RLC entity according to an eleventh mapping relationship; the eleventh mapping relationship being the mapping relationship between the sidelink interface bearer of the remote UE and the Uu interface backhaul link bearer of the remote UE;
in the downlink direction, receiving the adaptation layer PDU from the network device, removeing the adaptation layer header of the adaptation layer PDU, and obtaining the data packet to be processed; determining the corresponding sidelink interface bearer according to the bearer identifier of the remote UE on the sidelink interface, and delivering the to-be-processed data packet to the RLC entity corresponding to the sidelink interface bearer.

If the device is applied to a network device, the processor 2200 is further configured to read program instructions in the memory and perform the following operations:
in the uplink direction, determining the bearer identifier of the end-to-end bearer between the remote UE and the network device corresponding to the adaptation layer PDU according to the bearer identifier of the remote UE on the sidelink interface and a twelfth mapping relationship included in the PDU header of the adaptation layer PDU, and determining the corresponding PDCP entity; the twelfth mapping relationship being the mapping relationship between the sidelink interface bearer of the remote UE and the end-to-end bearer between the remote UE and the network device;
in the downlink direction, generating the adaptation layer PDU, and delivering the adaptation layer PDU to the corresponding RLC entity according to a thirteenth mapping relationship; the thirteenth mapping relationship being the mapping relationship between the end-to-end bearer between the network device and the remote UE and the Uu interface backhaul link bearer of the remote UE.

If the PDU header of the adaptation layer PDU at least includes: the identifier of the end-to-end bearer between the remote UE and the network device allocated by the network device to the remote UE:
If the device is applied to a remote UE, the processor 2200 is further configured to read program instructions in the memory and perform the following operations:
in the uplink direction, generating the PDCP PDU, and deliver the PDCP PDU to the corresponding RLC entity according to a fifteenth mapping relationship; the fifteenth mapping relationship being the mapping relationship between the end-to-end bearer between the remote UE and the network device and the sidelink interface bearer of the remote UE;
in the downlink direction, receiving the RLC PDU from the relay UE, determining the corresponding PDCP entity according to a nineteenth mapping relationship; the nineteenth mapping relationship being the mapping relationship between the sidelink interface bearer of the remote UE and the end-to-end bearer between the remote UE and the network device.

If the device is applied to a relay UE, the processor 2200 is further configured to read program instructions in the memory and perform the following operations:
in the uplink direction, generating an adaptation layer PDU according to the PDCP PDU of the remote UE, and delivering the adaptation layer PDU to the RLC entity corresponding to the Uu interface backhaul link bearer according to a sixteenth mapping relationship; the sixteenth mapping relationship being the mapping relationship between the sidelink interface bearer of the remote UE and the bearer of the remote UE on the backhaul link of the Uu interface;
in the downlink direction, receiving the adaptation layer PDU of the network device, removing the adaptation layer header of the adaptation layer PDU, and obtaining the data packet to be processed; determining the sidelink interface bearer corresponding to the remote UE according to an eighteenth mapping relationship, and delivering the to-be-processed data packet to the RLC entity corresponding to the sidelink interface bearer; the eighteenth mapping relationship being the relationship between the Uu interface backhaul link bearer of the remote UE and the sidelink interface bearer of the remote UE.

If the device is applied to a network device, the processor 2200 is further configured to read program instructions in the memory and perform the following operations:
in the uplink direction, determining the corresponding PDCP entity according to the identifier of the end-to-end bearer between the remote UE and the network device allocated by the network device to the remote UE and contained in the PDU header of the adaptation layer PDU sent by the relay UE;
in the downlink direction, generating an adaptation layer PDU, and delivering the adaptation layer PDU to the corresponding RLC entity according to a seventeenth mapping relationship; the seventeenth mapping relationship being mapping relationship between the end-to-end bearer between the network device and the remote UE and the Uu interface backhaul link bearer of the remote UE.

For the UE-to-UE relay scenario, the processor 2200 is further configured to read program instructions in the memory and perform the following operations:
establishing an end-to-end adaptation layer between the first remote UE and the second remote UE; or
establishing an end-to-end adaptation layer between the relay UE and the second remote UE.

The processor 2200 is further configured to read program instructions in the memory and perform the following operations:
adding an end-to-end adaptation layer above the RLC layer of the first remote UE and above the RLC layer of the second remote UE respectively.

If the device is applied to the first remote UE, the processor 2200 is further configured to read program instructions in the memory and perform the following operations:
generating an adaptation layer PDU, and determining the corresponding RLC entity when the adaptation layer PDU is transmitted between the first remote UE and the relay UE according to a twentieth mapping relationship; the twentieth mapping relationship being the mapping relationship between the sidelink end-to-end bearer between the first remote UE and the second remote UE and the sidelink interface bearer between the first remote UE and the relay UE.

If the device is applied to a relay UE, the processor 2200 is further configured to read program instructions in the memory and perform the following operations:
receiving the adaptation layer PDU, and determining the corresponding RLC entity when the adaptation layer PDU is transmitted between the relay UE and the second remote UE according to a twenty-first mapping relationship; the twenty-first mapping relationship being a mapping relationship between the bearer of the sidelink interface between the first remote UE and the relay UE and the bearer of the sidelink interface between the relay UE and the second remote UE.

If the device is applied to the second remote UE, the processor 2200 is further configured to read program instructions in the memory and perform the following operations:
receiving the adaptation layer PDU, and determining the corresponding the PDCP entity according to the end-to-end bearer identifiers of the first remote UE and the second remote UE on the sidelink interface included in the PDU header of the adaptation layer PDU.

The processor 2200 is further configured to read program instructions in the memory and perform the following operations:
adding an end-to-end adaptation layer above the RLC layer of the relay UE and above the RLC layer of the second remote UE, respectively.

If the device is applied to the first remote UE, the processor 2200 is further configured to read program instructions in the memory and perform the following operations:
generating the PDCP PDU, and determining the RLC entity corresponding to the PDCP PDU according to a twenty-second mapping relationship; the twenty-second mapping relationship being the mapping relationship between the sidelink end-to-end bearer between the first remote UE and the second remote UE and the end-to-end bearer between the first remote UE and the relay UE;
If the device is applied to a relay UE, the processor 2200 is further configured to read program instructions in the memory and perform the following operations:
   generating an adaptation layer PDU according to the PDCP PDU, and determining a corresponding RLC entity when the adaptation layer PDU is transmitted between the relay UE and the second remote UE according to a twenty-third mapping relationship; the twenty-third mapping relationship being the mapping relationship between the bearer of the sidelink interface between the first remote UE and the relay UE and the bearer of the sidelink interface between the relay UE and the second remote UE.

If the device is applied to the second remote UE, the processor 2200 is further configured to read program instructions in the memory and perform the following operations:
receiving the adaptation layer PDU, and determining the corresponding PDCP entity according to the end-to-end bearer identifiers of the first remote UE and the second remote UE on the sidelink interface included in the PDU header of the adaptation layer PDU.

The device provided by the embodiment of the present disclosure can execute the above method embodiments, and the implementation principles and technical effects thereof are similar, and details are not described herein again in this embodiment.

Embodiments of the present disclosure further provide a computer-readable storage medium, where a computer program is stored on the computer-readable storage medium. When the computer program is executed by a processor, each process of the foregoing information transmission method embodiments can be implemented, and the same effect can be achieved, which is not repeated here to avoid repetition. The computer-readable storage medium is, for example, a read-only memory (ROM), a random access memory (RAM), a magnetic disk, or an optical disk.

It should be noted that, herein, the terms "comprising", "including" or any other variation thereof are intended to encompass non-exclusive inclusion, such that a process, method, article or device comprising a series of elements includes not only those elements, It also includes other elements not expressly listed or inherent to such a process, method, article or device. Without further limitation, an element qualified by the phrase "comprising a..." does not preclude the presence of additional identical elements in a process, method, article or device that includes the element.

From the description of the above embodiments, those skilled in the art can clearly understand that the method of the above embodiment can be implemented by means of software plus a necessary general hardware platform, and of course can also be implemented by hardware, but in many cases the former is better implementation. According to this understanding, the technical solutions of the present disclosure can be embodied in the form of software products in essence, or the parts that make contributions to related technologies. The computer software products are stored in a storage medium (such as ROM/RAM, magnetic disk, optical disk) ), including several instructions to make a terminal (which may be a mobile phone, a computer, a server, an air conditioner, or a network device, etc.) execute the methods described in the various embodiments of the present disclosure.

It should be noted that that the division of the above modules is only a division of logical functions, and in actual implementation, all or part of modules may be integrated into a physical entity, or may be physically separated. And these modules can all be implemented in the form of software called by processing elements; they can also all be implemented in hardware; some modules can also be implemented in the form of calling software by processing elements, and some modules can be implemented in hardware. For example, the determination module may be a separately established processing element, or may be integrated into a certain chip of the above-mentioned device to be implemented, in addition, it may also be stored in the memory of the above-mentioned device in the form of program code, and a certain processing element of the above-mentioned device may call and execute the function of the above determined module. The implementation of other modules is similar. In addition, all or part of these modules can be integrated together, and can also be implemented independently. The processing element described here may be an integrated circuit with signal processing capability. In the implementation process, each step of the above-mentioned method or each of the above-mentioned modules can be completed by an integrated logic circuit of hardware in the processor element or an instruction in the form of software.

For example, each module, unit, sub-unit or sub-module may be one or more integrated circuits configured to implement the above method, such as: one or more Application Specific Integrated Circuits (ASIC), or, one or more microprocessors (digital signal processors, DSP), or, one or more field programmable gate arrays (FPGA), etc. For another example, when one of the above modules is implemented in the form of a processing element calling program code, the processing element may be a general-purpose processor, such as a central processing unit (CPU) or other processors that can invoke program codes. For another example, these modules can be integrated together and implemented in the form of a system-on-a-chip (SOC).

The terms "first", "second", etc. in the description and claims of the present disclosure are used to distinguish similar objects, and are not necessarily used to describe a specific order or sequence. It is to be understood that the data can be interchanged under appropriate circumstances such that the embodiments of the disclosure described herein are implemented in sequences other than those illustrated or described herein, for example. Furthermore, the terms "comprising" and "having", and any variations thereof, are intended to cover non-exclusive inclusion, for example, a process, method, system, product or device comprising a series of steps or units is not necessarily limited to those expressly listed, those steps or units may include other steps or units not expressly listed or inherent to these processes, methods, products or devices. In addition, the use of "and/or" in the specification and the claims means at least one of the linked objects, such as A and/or B and/or C, is meant to include A alone, B alone, C alone, and both A and B, B and C, A and C, and A, B, and C. Similarly, the use of "at least one of A and B" in this disclosure and in the claims should be understood to mean "A alone, B alone, or both A and B present."

The above are optional embodiments of the present disclosure.

## Claims

1. An information transmission method, comprising:
in a layer 2, L2, relay scenario, establishing (301) an end-to-end adaptation layer; wherein, a function of the end-to-end adaptation layer includes one or a combination of routing and bearer mapping;
**characterized in that** the method comprises:
for a UE-to-Network relay scenario, a protocol data unit, PDU, header of an adaptation layer PDU at least including: a bearer identifier of a remote UE on a sidelink interface, or an identifier of an end-to-end bearer between the remote UE and a network device allocated by the network device to the remote UE;
wherein the bearer identifier of the remote UE on the sidelink interface at least includes: a sidelink interface source L2 ID, a sidelink interface destination L2 ID, and a sidelink interface logical channel identifier;
wherein the identifier of the end-to-end bearer between the remote UE and the network device allocated by the network device to the remote UE includes: UE identification information allocated by the network device to the remote UE, an end-to-end logical channel identifier between the remote UE and the network device; or,
the identifier of the end-to-end bearer between the remote UE and the network device allocated by the network device to the remote UE includes: the UE identification information allocated by the network device to the remote UE, an end-to-end bearer identifier between the remote UE and the network device.

2. The method according to claim 1, for a UE-to-UE relay scenario, the PDU header of the adaptation layer PDU at least including: end-to-end bearer identifiers of a first remote UE and a second remote UE on the sidelink interface.

3. The method according to claim 2, wherein,
the end-to-end bearer identifiers of the first remote UE and the second remote UE on the sidelink interface include: the sidelink interface source L2 ID, the sidelink interface destination L2 ID, and the sidelink interface logical channel identifier; or, the end-to-end bearer identifiers of the first remote UE and the second remote UE on the sidelink interface include: the sidelink interface source L2 ID, the sidelink interface destination L2 ID, and the sidelink interface bearer identifier.

4. The method according to claim 3, wherein the PDU header of the adaptation layer PDU further comprises a sidelink interface cast type identifier.

5. The method according to any one of claims 1-4, wherein, for a UE-to-Network relay scenario, the establishing an end-to-end adaptation layer includes:
establishing the end-to-end adaptation layer between the remote UE and the network device; or,
establishing the end-to-end adaptation layer between a relay UE and the network device.

6. The method according to claim 5, wherein the establishing the end-to-end adaptation layer between the remote UE and the network device comprises:
adding the end-to-end adaptation layer above a radio link control, RLC, layer of the remote UE and above an RLC layer of the network device.

7. The method according to claim 6, further comprising:
if the PDU header of the adaptation layer PDU at least includes: the bearer identifier of the remote UE on the sidelink interface:
in the uplink direction, generating, by the adaptation layer of the remote UE, the adaptation layer PDU, and delivering the adaptation layer PDU to a corresponding RLC entity according to a first mapping relationship; the first mapping relationship being a mapping relationship between the end-to-end bearer between the network device and the remote UE and the sidelink interface bearer of the remote UE;
receiving, by the relay UE, the adaptation layer PDU, and delivering the adaptation layer PDU to an RLC entity corresponding to a Uu interface backhaul link bearer according to a second mapping relationship and the bearer identifier of the remote UE on the sidelink interface; the second mapping relationship being a mapping relationship between a sidelink interface bearer of the remote UE and a Uu interface backhaul link bearer of the remote UE;
determining, by the network device, the bearer identifier of the end-to-end bearer between the remote UE and the network device corresponding to the adaptation layer PDU according to a third mapping relationship and the bearer identifier of the remote UE on the sidelink interface included in the PDU header of the adaptation layer PDU, and determining a corresponding packet data convergence protocol, PDCP, entity; the third mapping relationship being a mapping relationship between the sidelink interface bearer of the remote UE and the end-to-end bearer between the remote UE and the network device;
or
the method further includes:
If the PDU header of the adaptation layer PDU at least includes: the bearer identifier of the remote UE on the sidelink interface:
in the downlink direction, generating, by the adaptation layer of the network device, the adaptation layer PDU, and delivering the adaptation layer PDU to the corresponding RLC entity according to a fourth mapping relationship; the fourth mapping relationship being a mapping relationship between the end-to-end bearer between the network device and the remote UE and the Uu interface backhaul link bearer of the remote UE;
receiving, by the relay UE, the adaptation layer PDU, determining a corresponding sidelink interface bearer according to the bearer identifier of the remote UE on the sidelink interface, and delivering the adaptation layer PDU to the RLC entity corresponding to the sidelink interface bearer;
receiving, by the remote UE, the adaptation layer PDU, and determining the bearer identifier of the end-to-end bearer between the remote UE and the network device corresponding to the adaptation layer PDU according to a fifth mapping relationship and the bearer identifier of the remote UE on the sidelink interface included in the PDU header of the adaptation layer PDU, and determining a corresponding PDCP entity; the fifth mapping relationship being a mapping relationship between the sidelink interface bearer of the remote UE and the end-to-end bearer between the remote UE and the network device;
or
the method further includes:
if the PDU header of the adaptation layer PDU at least includes: the identifier of the end-to-end bearer between the remote UE and the network device allocated by the network device to the remote UE:
in the uplink direction, generating, by the adaptation layer of the remote UE, the adaptation layer PDU, and delivering the adaptation layer PDU to a corresponding RLC entity according to a sixth mapping relationship; the sixth mapping relationship being a mapping relationship between the end-to-end bearer between the network device and the remote UE and the sidelink interface bearer of the remote UE;
receiving, by the relay UE, the adaptation layer PDU, and delivering the adaptation layer PDU to an RLC entity corresponding to the Uu interface backhaul link bearer according to a seventh mapping relationshipe; the seventh mapping relationship being a mapping relationship between the sidelink interface bearer of the remote UE and the Uu interface backhaul link bearer of the remote UE;
receiving, by the network device, the adaptation layer PDU and determining the corresponding PDCP entity according to the identifier of the end-to-end bearer between the remote UE and the network device allocated by the network device to the remote UE included in the PDU header of the adaptation layer PDU;
or
the method further comprises:
if the PDU header of the adaptation layer PDU at least includes: the identifier of the end-to-end bearer between the remote UE and the network device allocated by the network device to the remote UE:
in the downlink direction, generating, by the adaptation layer of the network device, the adaptation layer PDU, and delivering the adaptation layer PDU to the corresponding RLC entity according to an eighth mapping relationship; the eighth mapping relationship being a mapping relationship between the end-to-end bearer between the network device and the remote UE and the Uu interface backhaul link bearer of the remote UE;
receiving, by the relay UE, the adaptation layer PDU, and determining the corresponding sidelink interface bearer according to the identifier of the end-to-end bearer between the remote UE and the network device allocated by the network device to the remote UE and a ninth mapping relationship, and delivering the adaptation layer PDU to the RLC entity corresponding to the sidelink interface bearer; the ninth mapping relationship being a mapping relationship between the Uu interface backhaul link bearer of the remote UE and the sidelink interface bearer of the remote UE;
receiving, by the remote UE, the adaptation layer PDU, and determining the corresponding PDCP entity according to the identifier of the end-to-end bearer between the remote UE and the network device allocated by the network device to the remote UE included in the PDU header of the adaptation layer PDU.

8. The method according to claim 5, wherein the establishing the end-to-end adaptation layer between the relay UE and the network device comprises:
adding the end-to-end adaptation layer above the RLC layer of the relay UE and above the RLC layer of the network devices respectively.

9. The method according to claim 8, further comprising:
if the PDU header of the adaptation layer PDU at least includes: the bearer identifier of the remote UE on the sidelink interface:
in the uplink direction, generating, by the remote UE, a PDCP PDU, and delivering the PDCP PDU to a corresponding RLC entity according to a tenth mapping relationship; the tenth mapping relationship being a mapping relationship between that the end-to-end bearer between the remote UE and the network device and the sidelink interface bearer of the remote UE;
generating, by the relay UE, the adaptation layer PDU according to the PDCP PDU, and delivering the adaptation layer PDU to the corresponding RLC entity according to an eleventh mapping relationship; the eleventh mapping relationship being a mapping relationship between the sidelink interface bearer of the remote UE and the Uu interface backhaul link bearer of the remote UE;
determining, by the network device, the bearer identifier of the end-to-end bearer between the remote UE and the network device corresponding to the adaptation layer PDU according to a twelfth mapping relationship and the bearer identifier of the remote UE on the sidelink interface included in the PDU header of the adaptation layer PDU, and determining the corresponding PDCP entity; the twelfth mapping relationship being a mapping relationship between the sidelink interface bearer of the remote UE and the end-to-end bearer between the remote UE and the network device;
or
the method further comprises:
if the PDU header of the adaptation layer PDU at least includes: the bearer identifier of the remote UE on the sidelink interface:
in the downlink direction, generating, by the adaptation layer of the network device, the adaptation layer PDU, and delivering the adaptation layer PDU to the corresponding RLC entity according to a thirteenth mapping relationship; the thirteenth mapping relationship being a mapping relationship between the end-to-end bearer between the network device and the remote UE and the Uu interface backhaul link bearer of the remote UE;
receiving, by the relay UE, the adaptation layer PDU, removing an adaptation layer header of the adaptation layer PDU, and obtaining a to-be-processed data packet; determining the corresponding sidelink interface bearer according to the bearer identifier of the remote UE on the sidelink interface, and delivering the to-be-processed data packet to the RLC entity corresponding to the sidelink interface bearer;
receiving, by the remote UE, the RLC PDU, and determining the corresponding PDCP entity according to a fourteenth mapping relationship; the fourteenth mapping relationship being a mapping relationship between the sidelink interface bearer of the remote UE and the end-to-end bearer between the remote UE and the network device;
or
the method further comprises:
if the PDU header of the adaptation layer PDU at least includes: the identifier of the end-to-end bearer between the remote UE and the network device allocated by the network device to the remote UE:
in the uplink direction, generating, by the remote UE, the PDCP PDU, and delivering the PDCP PDU to the corresponding RLC entity according to a fifteenth mapping relationship; the fifteenth mapping relationship being a mapping relationship between the end-to-end bearer between the remote UE and the network device and the sidelink interface bearer of the remote UE;
generating, by the relay UE, the adaptation layer PDU according to the PDCP PDU, and delivering the adaptation layer PDU to the RLC entity corresponding to the Uu interface backhaul link bearer according to a sixteenth mapping relationship; the sixteenth mapping relationship being a mapping relationship between the sidelink interface bearer of the remote UE and the Uu interface backhaul link bearer of the remote UE;
determining, by the network device, the corresponding PDCP entity according to the identifier of the end-to-end bearer between the remote UE and the network device allocated by the network device to the remote UE and contained in the PDU header of the adaptation layer PDU;
the method further comprises:
if the PDU header of the adaptation layer PDU at least includes: the identifier of the end-to-end bearer between the remote UE and the network device allocated by the network device to the remote UE:
in the downlink direction, generating by the adaptation layer of the network device, the adaptation layer PDU, and delivering the adaptation layer PDU to the corresponding RLC entity according to a seventeenth mapping relationship; the seventeenth mapping relationship is a mapping relationship between the end-to-end bearer between the network device and the remote UE and the Uu interface backhaul link bearer of the remote UE;
receiving, by the relay UE, the adaptation layer PDU, removing the adaptation layer header of the adaptation layer PDU, and obtaining a to-be-processed data packet; determining the sidelink interface bearer corresponding to the remote UE according to an eighteenth mapping relationship, and delivering the to-be-processed data packet to the RLC entity corresponding to the sidelink interface bearer; the eighteenth mapping relationship being a mapping relationship between the Uu interface backhaul link bearer of the remote UE and the sidelink interface bearer of the remote UE;
receiving, by the remote UE, the RLC PDU, determining the corresponding PDCP entity according to a nineteenth mapping relationship; the nineteenth mapping relationship being a mapping relationship between the sidelink interface bearer of the remote UE and the end-to-end bearer between the remote UE and the network device.

10. The method according to claim 2, wherein, for the UE-to-UE relay scenario, the establishing an end-to-end adaptation layer comprises:
establishing the end-to-end adaptation layer between the first remote UE and the second remote UE; or,
establishing the end-to-end adaptation layer between the relay UE and the second remote UE.

11. The method according to claim 10, wherein the establishing the end-to-end adaptation layer between the first remote UE and the second remote UE comprises:
adding the end-to-end adaptation layer above the RLC layer of the first remote UE and above the RLC layer of the second remote UE respectively,
wherein the method further comprises:
generating, by an adaptation layer of the first remote UE, an adaptation layer PDU, and determining a corresponding RLC entity when the adaptation layer PDU is transmitted between the first remote UE and the relay UE according to a twentieth mapping relationship; the twentieth mapping relationship being a mapping relationship between a sidelink end-to-end bearer between the first remote UE and the second remote UE and a sidelink interface bearer between the first remote UE and the relay UE;
receiving, by the relay UE, the adaptation layer PDU, and determining the corresponding RLC entity when the adaptation layer PDU is transmitted between the relay UE and the second remote UE according to a twenty-first mapping relationship; the twenty-first mapping relationship being a mapping relationship between the sidelink interface bearer between the first remote UE and the relay UE and the sidelink interface bearer between the relay UE and the second remote UE;
receiving, by the second remote UE, the adaptation layer PDU, and determining the corresponding the PDCP entity according to the end-to-end bearer identifiers of the first remote UE and the second remote UE on the sidelink interface included in the PDU header of the adaptation layer PDU.

12. The method according to claim 10, wherein the establishing the end-to-end adaptation layer between the first remote UE and the second remote UE comprises:
adding the end-to-end adaptation layer above the RLC layer of the relay UE and above the RLC layer of the second remote UE respectively,
the method further comprises:
generating, by the first remote UE, the PDCP PDU, and determining the RLC entity corresponding to the PDCP PDU according to a twenty-second mapping relationship; the twenty-second mapping relationship being a mapping relationship between the sidelink end-to-end bearer between the first remote UE and the second remote UE and the end-to-end bearer between the first remote UE and the relay UE;
generating, by the relay UE, the adaptation layer PDU according to the PDCP PDU, and determining a corresponding RLC entity when the adaptation layer PDU is transmitted between the relay UE and the second remote UE according to a twenty-third mapping relationship; the twenty-third mapping relationship being a mapping relationship between the sidelink interface bearer between the first remote UE and the relay UE and the sidelink interface bearer between the relay UE and the second remote UE;
receiving, by the second remote UE, the adaptation layer PDU, and determining the corresponding PDCP entity according to the end-to-end bearer identifiers of the first remote UE and the second remote UE on the sidelink interface included in the PDU header of the adaptation layer PDU.

13. An information transmission device(2100), comprising:
an establishing module(2101), configured to establish an end-to-end adaptation layer in an L2 relay scenario; wherein, a function of the adaptation layer includes one or a combination: routing, bearer mapping;
**characterized by** for a UE-to-Network relay scenario, a protocol data unit, PDU, header of an adaptation layer PDU at least including: a bearer identifier of a remote UE on a sidelink interface, or an identifier of an end-to-end bearer between the remote UE and a network device allocated by the network device to the remote UE;
wherein, the bearer identifier of the remote UE on the sidelink interface at least includes: a sidelink interface source L2 ID, a sidelink interface destination L2 ID, and a sidelink interface logical channel identifier;
wherein, the identifier of the end-to-end bearer between the remote UE and the network device allocated by the network device to the remote UE includes: UE identification information allocated by the network device to the remote UE, an end-to-end logical channel identifier between the remote UE and the network device; or,
the identifier of the end-to-end bearer between the remote UE and the network device allocated by the network device to the remote UE includes: the UE identification information allocated by the network device to the remote UE, an end-to-end bearer identifier between the remote UE and the network device.

14. The device according to claim 13, wherein for a UE-to-UE relay scenario, the PDU header of the adaptation layer PDU at least including: end-to-end bearer identifiers of a first remote UE and a second remote UE on the sidelink interface.

15. The device according to claim 14, wherein,
the end-to-end bearer identifiers of the first remote UE and the second remote UE on the sidelink interface include: the sidelink interface source L2 ID, the sidelink interface destination L2 ID, and the sidelink interface logical channel identifier; or, the end-to-end bearer identifiers of the first remote UE and the second remote UE on the sidelink interface include: the sidelink interface source L2 ID, the sidelink interface destination L2 ID, and the sidelink interface bearer identifier,
wherein, for a UE-to-Network relay scenario, the establishing module is further configured to:
establish the end-to-end adaptation layer between the remote UE and the network device; or,
establish the end-to-end adaptation layer between a relay UE and the network device,
wherein, for a UE-to-UE relay scenario, the establishing module is further configured to:
establishing the end-to-end adaptation layer between a first remote UE and a second remote UE; or,
establishing the end-to-end adaptation layer between a relay UE and the second remote UE.

## Patentansprüche

1. Informationsübertragungsverfahren mit dem folgenden Schritt:
in einem Layer-2-, L2,-Relais-Szenario, Einrichten (301) einer Ende-zu-Ende-Anpassungsschicht; wobei eine Funktion der Ende-zu-Ende-Anpassungsschicht ein Routing oder ein Träger-Mapping oder eine Kombination derselben umfasst;
**dadurch gekennzeichnet, dass** das Verfahren aufweist:
für ein UE-zu-Netz-Relais-Szenario, einen Protokolldateneinheit-, PDU,-Header einer Anpassungsschicht-PDU, der zumindest aufweist: eine Trägerkennung eines entfernten UE auf einer Sidelink-Schnittstelle oder eine Kennung eines Ende-zu-Ende-Trägers zwischen dem entfernten UE und einem Netzgerät, die von dem Netzgerät dem entfernten UE zugewiesen wird;
wobei die Trägerkennung des entfernten UE auf der Sidelink-Schnittstelle mindestens aufweist: eine Sidelink-Schnittstellen-Quellen-L2-ID, eine Sidelink-Schnittstellen-Ziel-L2-ID und eine logische Sidelink-Schnittstellen-Kanalkennung;
wobei die Kennung des Ende-zu-Ende-Trägers zwischen dem entfernten UE und dem Netzgerät, die von dem Netzgerät dem entfernten UE zugewiesen wird, aufweist: UE-Identifizierungsinformationen, die von dem Netzgerät dem entfernten UE zugewiesen werden, eine Ende-zu-Ende-Logikkanal-Kennung zwischen dem entfernten UE und dem Netzgerät; oder
die Kennung des Ende-zu-Ende-Trägers zwischen dem entfernten UE und dem Netzgerät, die von dem Netzgerät dem entfernten UE zugewiesen wird, aufweist: die UE-Identifizierungsinformationen, die von dem Netzgerät dem entfernten UE zugewiesen werden, eine Ende-zu-Ende-Trägerkennung zwischen dem entfernten UE und dem Netzgerät.

2. Verfahren nach Anspruch 1, für ein UE-zu-UE-Relais-Szenario, wobei der PDU-Header der Anpassungsschicht-PDU mindestens aufweist: Ende-zu-Ende-Trägerkennungen eines ersten entfernten UE und eines zweiten entfernten UE auf der Sidelink-Schnittstelle.

3. Verfahren gemäß Anspruch 2, bei welchem
die Ende-zu-Ende-Trägerkennungen des ersten entfernten UE und des zweiten entfernten UE auf der Sidelink-Schnittstelle aufweisen: die Sidelink-Schnittstellen-Quellen-L2-ID, die Sidelink-Schnittstellen-Ziel-L2-ID und die logische Kanalkennung der Sidelink-Schnittstelle; oder die Ende-zu-Ende-Trägerkennungen des ersten entfernten UE und des zweiten entfernten UE auf der Sidelink-Schnittstelle umfassen: die Sidelink-Schnittstellen-Quellen-L2-ID, die Sidelink-Schnittstellen-Ziel-L2-ID und die Sidelink-Schnittstellen-Trägerkennung.

4. Verfahren nach Anspruch 3, bei welchem der PDU-Header der Anpassungsschicht-PDU ferner einen Sidelink-Interface Cast Type Identifier aufweist.

5. Verfahren nach einem der Ansprüche 1-4, bei welchem für ein UE-zu-Netz-Relais-Szenario das Einrichten einer Ende-zu-Ende-Anpassungsschicht die folgenden Schritte aufweist:
Einrichten der Ende-zu-Ende-Anpassungsschicht zwischen dem entfernten UE und dem Netzgerät; oder,
Einrichten der Ende-zu-Ende-Anpassungsschicht zwischen einem Relais-UE und dem Netzgerät.

6. Verfahren nach Anspruch 5, bei welchem das Einrichten der Ende-zu-Ende-Anpassungsschicht zwischen dem entfernten UE und dem Netzgerät die folgenden Schritte aufweist:
Hinzufügen der Ende-zu-Ende-Anpassungsschicht über einer Funkverbindungssteuerungsschicht, RLC, des entfernten UE und über einer RLC-Schicht des Netzgeräts.

7. Verfahren nach Anspruch 6, ferner mit den Schritten:
wenn der PDU-Header der Anpassungsschicht-PDU mindestens aufweist: die Trägerkennung des entfernten UE auf der Sidelink-Schnittstelle:
in der Uplink-Richtung, Erzeugen der Anpassungsschicht-PDU durch die Anpassungsschicht des entfernten UE und Liefern der Anpassungsschicht-PDU an eine entsprechende RLC-Einheit gemäß einer ersten Abbildungsbeziehung; wobei die erste Abbildungsbeziehung eine Abbildungsbeziehung zwischen dem Ende-zu-Ende-Träger zwischen dem Netzwerkgerät und dem entfernten UE und dem Sidelink-Schnittstellenträger des entfernten UE ist;
Empfangen der Anpassungsschicht-PDU durch das Relais-UE und Liefern der Anpassungsschicht-PDU an eine RLC-Einheit, die einem Uu-Schnittstellen-Backhaul-Link-Träger gemäß einer zweiten Abbildungsbeziehung und der Trägerkennung des entfernten UE auf der Sidelink-Schnittstelle entspricht; wobei die zweite Abbildungsbeziehung eine Abbildungsbeziehung zwischen einem Sidelink-Schnittstellen-Träger des entfernten UE und einem Uu-Schnittstellen-Backhaul-Link-Träger des entfernten UE ist;
Bestimmen, durch das Netzgerät, der Trägerkennung des Ende-zu-Ende-Trägers zwischen dem entfernten UE und dem Netzgerät entsprechend der Anpassungsschicht-PDU gemäß einer dritten Abbildungsbeziehung und der Trägerkennung des entfernten UE auf der Sidelink-Schnittstelle, die in dem PDU-Header der Anpassungsschicht-PDU enthalten ist, und Bestimmen einer entsprechenden Paketdatenkonvergenzprotokoll-, PDCP,-Einheit; wobei die dritte Abbildungsbeziehung eine Abbildungsbeziehung zwischen dem Sidelink-Schnittstellenträger des entfernten UE und dem Ende-zu-Ende-Träger zwischen dem entfernten UE und dem Netzgerät ist;
oder
das Verfahren ferner die folgenden Schritte aufweist:
wenn der PDU-Header der Anpassungsschicht-PDU mindestens aufweist: die Trägerkennung des entfernten UE auf der Sidelink-Schnittstelle:
in der Downlink-Richtung, Erzeugen der Anpassungsschicht-PDU durch die Anpassungsschicht des Netzgeräts und Liefern der Anpassungsschicht-PDU an die entsprechende RLC-Einheit gemäß einer vierten Abbildungsbeziehung; wobei die vierte Abbildungsbeziehung eine Abbildungsbeziehung zwischen dem Ende-zu-Ende-Träger zwischen dem Netzgerät und dem entfernten UE und dem Uu-Schnittstellen-Backhaul-Link-Träger des entfernten UE ist;
Empfangen der Anpassungsschicht-PDU durch das Relais-UE, Bestimmen eines entsprechenden Sidelink-Schnittstellenträgers gemäß der Trägerkennung des entfernten UE auf der Sidelink-Schnittstelle und Liefern der Anpassungsschicht-PDU an die RLC-Einheit entsprechend dem Sidelink-Schnittstellenträger;
Empfangen, durch das entfernte UE, der Anpassungsschicht-PDU, und Bestimmen der Trägerkennung des Ende-zu-Ende-Trägers zwischen dem entfernten UE und dem Netzgerät entsprechend der Anpassungsschicht-PDU gemäß einer fünften Abbildungsbeziehung und der Trägerkennung des entfernten UE auf der Sidelink-Schnittstelle, die in dem PDU-Header der Anpassungsschicht-PDU enthalten ist, und Bestimmen einer entsprechenden PDCP-Einheit; wobei die fünfte Abbildungsbeziehung eine Abbildungsbeziehung zwischen dem Sidelink-Schnittstellenträger des entfernten UE und dem Ende-zu-Ende-Träger zwischen dem entfernten UE und dem Netzgerät ist;
oder
das Verfahren ferner die folgenden Schritte aufweist:
wenn der PDU-Header der Anpassungsschicht-PDU mindestens aufweist: die Kennung des Ende-zu-Ende-Trägers zwischen dem entfernten UE und dem Netzgerät, die von dem Netzgerät dem entfernten UE zugewiesen wird:
in der Uplink-Richtung, Erzeugen der Anpassungsschicht-PDU durch die Anpassungsschicht des entfernten UE und Liefern der Anpassungsschicht-PDU an eine entsprechende RLC-Einheit gemäß einer sechsten Abbildungsbeziehung; wobei die sechste Abbildungsbeziehung eine Abbildungsbeziehung zwischen dem Ende-zu-Ende-Träger zwischen dem Netzwerkgerät und dem entfernten UE und dem Sidelink-Schnittstellen-träger des entfernten UE ist;
Empfangen der Anpassungsschicht-PDU durch das Relais-UE und Liefern der Anpassungsschicht-PDU an eine RLC-Einheit, die dem Uu-Schnittstellen-Backhaul-Link-Träger gemäß einer siebten Abbildungsbeziehung entspricht; wobei die siebte Abbildungsbeziehung eine Abbildungsbeziehung zwischen dem Sidelink-Schnittstellen-Träger des entfernten UE und dem Uu-Schnittstellen-Backhaul-Link-Träger des entfernten UE ist;
Empfangen der Anpassungsschicht-PDU durch das Netzgerät und Bestimmen der entsprechenden PDCP-Einheit gemäß der in dem PDU-Header der Anpassungsschicht-PDU enthaltenen Kennung des Ende-zu-Ende-Trägers zwischen dem entfernten UE und dem Netzgerät, die von dem Netzgerät dem entfernten UE zugewiesen wird:
oder
das Verfahren die folgenden Schritte aufweist:
wenn der PDU-Header der Anpassungsschicht-PDU mindestens aufweist: die Kennung des Ende-zu-Ende-Trägers zwischen dem entfernten UE und dem Netzgerät, die von dem Netzgerät dem entfernten UE zugewiesen wird:
in der Downlink-Richtung, Erzeugen der Anpassungsschicht-PDU durch die Anpassungsschicht des Netzgeräts und Liefern der Anpassungsschicht-PDU an die entsprechende RLC-Einheit gemäß einer achten Abbildungsbeziehung; wobei die achte Abbildungsbeziehung eine Abbildungsbeziehung zwischen dem Ende-zu-Ende-Träger zwischen dem Netzgerät und dem entfernten UE und dem Uu-Schnittstellen-Backhaul-Link-Träger des entfernten UE ist;
Empfangen der Anpassungsschicht-PDU durch das Relais-UE und Bestimmen des entsprechenden Sidelink-Schnittstellen-Trägers gemäß der Kennung des Ende-zu-Ende-Trägers zwischen dem entfernten UE und dem Netzgerät, die von dem Netzgerät dem entfernten UE zugewiesen wird, und einer neunten Abbildungsbeziehung, und Liefern der Anpassungsschicht-PDU an die RLC-Einheit, die dem Sidelink-Schnittstellen-Träger entspricht; wobei die neunte Abbildungsbeziehung eine Abbildungsbeziehung zwischen dem Uu-Schnittstellen-Backhaul-Link-Träger des entfernten UE und dem Sidelink-Schnittstellen-Träger des entfernten UE ist;
Empfangen der Anpassungsschicht-PDU durch das entfernte UE und Bestimmen der entsprechenden PDCP-Einheit gemäß der in dem PDU-Header der Anpassungsschicht-PDU enthaltenen Kennung des Ende-zu-Ende-Trägers zwischen dem entfernten UE und dem Netzgerät, die von dem Netzgerät dem entfernten UE zugewiesen wird.

8. Verfahren nach Anspruch 5, bei welchem das Einrichten der Ende-zu-Ende-Anpassungsschicht zwischen dem Relais-UE und dem Netzgerät den folgenden Schritt aufweist:
Hinzufügen der Ende-zu-Ende-Anpassungsschicht jeweils über der RLC-Schicht des Relais-UE und über der RLC-Schicht des Netzgeräts.

9. Verfahren nach Anspruch 8, ferner mit den Schritten:
wenn der PDU-Header der Anpassungsschicht-PDU mindestens aufweist: die Trägerkennung des entfernten UE auf der Sidelink-Schnittstelle:
der Anpassungsschicht-PDU durch die entfernte UE einer PDCP-PDU und Liefern der PDCP-PDU an eine entsprechende RLC-Einheit gemäß einer zehnten Abbildungsbeziehung; wobei die zehnte Abbildungsbeziehung eine Abbildungsbeziehung zwischen dem Ende-zu-Ende-Träger zwischen dem entfernten UE und dem Netzgerät und dem Sidelink-Schnittstellenträger des entfernten UE ist;
Erzeugen der Anpassungsschicht-PDU durch das Relais-UE gemäß der PDCP-PU und Liefern der Anpassungsschicht-PDU an die entsprechende RLC-Einheit gemäß einer elften Abbildungsbeziehung entspricht; wobei die elfte Abbildungsbeziehung eine Abbildungsbeziehung zwischen dem Sidelink-Schnittstellen-Träger des entfernten UE und dem Uu-Schnittstellen-Backhaul-Link-Träger des entfernten UE ist;
Bestimmen, durch das Netzgerät, der Trägerkennung des Ende-zu-Ende-Trägers zwischen dem entfernten UE und dem Netzgerät entsprechend der Anpassungsschicht-PDU gemäß einer zwölften Abbildungsbeziehung und der Trägerkennung des entfernten UE auf der Sidelink-Schnittstelle, die in dem PDU-Header der Anpassungsschicht-PDU enthalten ist, und Bestimmen der entsprechenden PDCP-Einheit; wobei die zwölfte Abbildungsbeziehung eine Abbildungsbeziehung zwischen dem Sidelink-Schnittstellen-träger des entfernten UE und dem Ende-zu-Ende-Träger zwischen dem entfernten UE und dem Netzgerät ist;
oder
das Verfahren die folgenden Schritte aufweist:
wenn der PDU-Header der Anpassungsschicht-PDU mindestens aufweist: die Trägerkennung des entfernten UE auf der Sidelink-Schnittstelle:
in der Downlink-Richtung, Erzeugen der Anpassungsschicht-PDU durch die Anpassungsschicht des Netzgeräts und Liefern der Anpassungsschicht-PDU an die entsprechende RLC-Einheit gemäß einer dreizehnte Abbildungsbeziehung; wobei die dreizehnte Abbildungsbeziehung eine Abbildungsbeziehung zwischen dem Ende-zu-Ende-Träger zwischen dem Netzgerät und dem entfernten UE und dem Uu-Schnittstellen-Backhaul-Link-Träger des entfernten UE ist;
Empfangen der Anpassungsschicht-PDU durch das Relais-UE, Entfernen eines Anpassungsschicht-Headers der Anpassungsschicht-PDU, und Ermitteln eines zu verarbeitenden Datenpakets; Bestimmen des entsprechenden Sidelink-Schnittstellenträgers gemäß der Trägerkennung des entfernten UE auf der Sidelink-Schnittstelle und Liefern des zu verarbeitenden Datenpakets an die RLC-Einheit entsprechend dem Sidelink-Schnittstellen-Träger;
Empfangen der RLC PDU durch das entfernte UE und Bestimmen der entsprechenden PDCP-Einheit gemäß einer vierzehnten Abbildungsbeziehung; wobei die vierzehnte Abbildungsbeziehung eine Abbildungsbeziehung zwischen dem Sidelink-Schnittstellen-Träger des entfernten UE und dem Ende-zu-Ende-Träger zwischen dem entfernten UE und dem Netzgerät ist;
oder
das Verfahren die folgenden Schritte aufweist:
wenn der PDU-Header der Anpassungsschicht-PDU mindestens aufweist: die Kennung des Ende-zu-Ende-Trägers zwischen dem entfernten UE und dem Netzgerät, die von dem Netzgerät dem entfernten UE zugewiesen wird:
in der Uplink-Richtung, Erzeugen der PDCP-PDU durch das entfernte UE und Liefern der PDCP-PDU an eine entsprechende RLC-Einheit gemäß einer fünfzehnten Abbildungsbeziehung; wobei die fünfzehnte Abbildungsbeziehung eine Abbildungsbeziehung zwischen dem Ende-zu-Ende-Träger zwischen dem entfernten UE und dem Netzgerät und dem Sidelink-Schnittstellenträger des entfernten UE ist;
Erzeugen der Anpassungsschicht-PDU durch das Relais-UE gemäß der PDCP-PDU und Liefern der Anpassungsschicht-PDU an die RLC-Einheit, die dem Uu-Schnittstellen-Backhaul-Link-Träger gemäß einer sechzehnten Abbildungsbeziehung entspricht; wobei die sechzehnte Abbildungsbeziehung eine Abbildungsbeziehung zwischen dem Sidelink-Schnittstellen-Träger des entfernten UE und dem Uu-Schnittstellen-Backhaul-Link-Träger des entfernten UE ist;
Bestimmen der entsprechenden PDCP-Einheit durch das Netzgerät gemäß der in dem PDU-Header der Anpassungsschicht-PDU enthaltenen Kennung des Ende-zu-Ende-Trägers zwischen dem entfernten UE und dem Netzgerät, die von dem Netzgerät dem entfernten UE zugewiesen wird;
wobei das Verfahren ferner die folgenden Schritte aufweist:
wenn der PDU-Header der Anpassungsschicht-PDU mindestens aufweist: die Kennung des Ende-zu-Ende-Trägers zwischen dem entfernten UE und dem Netzgerät, die von dem Netzgerät dem entfernten UE zugewiesen wird:
in der Downlink-Richtung, Erzeugen der Anpassungsschicht-PDU durch die Anpassungsschicht des Netzgeräts und Liefern der Anpassungsschicht-PDU an die entsprechende RLC-Einheit gemäß einer siebzehnten Abbildungsbeziehung; wobei die siebzehnte Abbildungsbeziehung eine Abbildungsbeziehung zwischen dem Ende-zu-Ende-Träger zwischen dem Netzgerät und dem entfernten UE und dem Uu-Schnittstellen-Backhaul-Link-Träger des entfernten UE ist;
Empfangen der Anpassungsschicht-PDU durch das Relais-UE, Entfernen des Anpassungsschicht-Headers der Anpassungsschicht-PDU, und Ermitteln eines zu verarbeitenden Datenpakets; Bestimmen des dem entfernten UE entsprechenden Sidelink-Schnittstellen-Trägers gemäß einer achtzehnten Abbildungsbeziehung, und Liefern des zu verarbeitenden Datenpakets an die RLC-Einheit, die dem Sidelink-Schnittstellen-Träger entspricht; wobei die achtzehnte Abbildungsbeziehung eine Abbildungsbeziehung zwischen dem Uu-Schnittstellen-Backhaul-Link-Träger des entfernten UE und dem Sidelink-Schnittstellen-Träger des entfernten UE ist;
Empfangen der RLC PDU durch das entfernte UE, Bestimmen der entsprechenden PDCP-Einheit gemäß einer neunzehnten Abbildungsbeziehung; wobei die neunzehnte Abbildungsbeziehung eine Abbildungsbeziehung zwischen dem Sidelink-Schnittstellen-Träger des entfernten UE und dem Ende-zu-Ende-Träger zwischen dem entfernten UE und dem Netzgerät ist.

10. Verfahren nach Anspruch 2, bei welchem für das UE-zu-UE-Relais-Szenario das Einrichten einer Ende-zu-Ende-Anpassungsschicht die folgenden Schritte aufweist:
Einrichten der Ende-zu-Ende-Anpassungsschicht zwischen dem ersten entfernten UE und dem zweiten entfernten UE; oder,
Einrichten der Ende-zu-Ende-Anpassungsschicht zwischen dem Relais-UE und dem zweiten entfernten UE.

11. Verfahren nach Anspruch 10, bei welchem das Einrichten der Ende-zu-Ende-Anpassungsschicht zwischen dem ersten entfernten UE und dem zweiten entfernten UE den folgenden Schritt aufweist:
Hinzufügen der Ende-zu-Ende-Anpassungsschicht jeweils über der RLC-Schicht des ersten entfernten UE und über der RLC-Schicht des zweiten entfernten UE, wobei das Verfahren ferner die folgenden Schritte aufweist:
Erzeugen, durch eine Anpassungsschicht des ersten entfernten UE, einer Anpassungsschicht-PDU, und Bestimmen einer entsprechenden RLC-Einheit, wenn die Anpassungsschicht-PDU zwischen dem ersten entfernten UE und dem Relais-UE gemäß einer zwanzigsten Abbildungsbeziehung übertragen wird; wobei die zwanzigste Abbildungsbeziehung eine Abbildungsbeziehung zwischen einem Sidelink-Ende-zu-Ende-Träger zwischen dem ersten entfernten UE und dem zweiten entfernten UE und einem Sidelink-Schnittstellen-Träger zwischen dem ersten entfernten UE und dem Relais-UE ist;
Empfangen der Anpassungsschicht-PDU durch das Relais UE, und Bestimmen der entsprechenden RLC-Einheit, wenn die Anpassungsschicht-PDU zwischen dem Relais-UE und dem zweiten entfernten UE gemäß einer einundzwanzigsten Abbildungsbeziehung übertragen wird; wobei die einundzwanzigste Abbildungsbeziehung eine Abbildungsbeziehung zwischen dem Sidelink-Schnittstellen-Träger zwischen dem ersten entfernten UE und dem Relais-UE und dem Sidelink-Schnittstellen-Träger zwischen dem Relais-UE und dem zweiten entfernten UE ist;
Empfangen der Anpassungsschicht-PDU durch das zweite entfernte UE und Bestimmen der entsprechenden PDCP-Einheit gemäß der in dem PDU-Header der Anpassungsschicht-PDU enthaltenen Kennungen der Ende-zu-Ende-Träger des ersten entfernten UE und des zweiten entfernten UE auf der Sidelink-Schnittstelle.

12. Verfahren nach Anspruch 10, bei welchem das Einrichten der Ende-zu-Ende-Anpassungsschicht zwischen dem ersten entfernten UE und dem zweiten entfernten UE den folgenden Schritt aufweist:
Hinzufügen der Ende-zu-Ende-Anpassungsschicht jeweils über der RLC-Schicht des Relais-UE und über der RLC-Schicht des zweiten entfernten UE,
wobei das Verfahren ferner die folgenden Schritte aufweist:
Erzeugen der PDCP-PDU durch das erste entfernte UE und Bestimmen der RLC-Einheit, die der PDCP-PDU entspricht, gemäß einer zweiundzwanzigsten Abbildungsbeziehung; wobei die zweiundzwanzigste Abbildungsbeziehung eine Abbildungsbeziehung zwischen dem Sidelink-Ende-zu-Ende-Träger zwischen dem ersten entfernten UE und dem zweiten entfernten UE und dem Ende-zu-Ende-Träger zwischen dem ersten entfernten UE und dem Relais-UE ist;
Erzeugen der Anpassungsschicht-PDU durch das Relais UE gemäß der PDCP-PDU, und Bestimmen einer entsprechenden RLC-Einheit, wenn die Anpassungsschicht-PDU zwischen dem Relais-UE und dem zweiten entfernten UE gemäß einer dreiundzwanzigsten Abbildungsbeziehung übertragen wird; wobei die dreiundzwanzigste Abbildungsbeziehung eine Abbildungsbeziehung zwischen dem Sidelink-Schnittstellen-Träger zwischen dem ersten entfernten UE und dem Relais-UE und dem Sidelink-Schnittstellen-Träger zwischen dem Relais-UE und dem zweiten entfernten UE ist;
Empfangen der Anpassungsschicht-PDU durch das zweite entfernte UE und Bestimmen der entsprechenden PDCP-Einheit gemäß der in dem PDU-Header der Anpassungsschicht-PDU enthaltenen Kennungen der Ende-zu-Ende-Träger des ersten entfernten UE und des zweiten entfernten UE auf der Sidelink-Schnittstelle.

13. Informationsübertragungsvorrichtung (2100) mit:
einem Einrichtungsmodul (2101), das dazu ausgebildet ist, eine Ende-zu-Ende-Anpassungsschicht in einem L2-Relais-Szenario einzurichten; wobei eine Funktion der Anpassungsschicht ein Routing oder Träger-Mapping oder eine Kombination derselben aufweist;
**gekennzeichnet durch**, für ein UE-zu-Netz-Relais-Szenario, einen Protokolldateneinheit-, PDU,-Header einer Anpassungsschicht-PDU, der zumindest aufweist: eine Trägerkennung eines entfernten UE auf einer Sidelink-Schnittstelle oder eine Kennung eines Ende-zu-Ende-Trägers zwischen dem entfernten UE und einem Netzgerät, die von dem Netzgerät dem entfernten UE zugewiesen wird;
wobei die Trägerkennung des entfernten UE auf der Sidelink-Schnittstelle mindestens aufweist: eine Sidelink-Schnittstellen-Quellen-L2-ID, eine Sidelink-Schnittstellen-Ziel-L2-ID und eine logische Sidelink-Schnittstellen-Kanalkennung;
wobei die Kennung des Ende-zu-Ende-Trägers zwischen dem entfernten UE und dem Netzgerät, die von dem Netzgerät dem entfernten UE zugewiesen wird, aufweist: UE-Identifizierungsinformationen, die von dem Netzgerät dem entfernten UE zugewiesen werden, eine Ende-zu-Ende-Logikkanal-Kennung zwischen dem entfernten UE und dem Netzgerät; oder
die Kennung des Ende-zu-Ende-Trägers zwischen dem entfernten UE und dem Netzgerät, die von dem Netzgerät dem entfernten UE zugewiesen wird, aufweist: die UE-Identifizierungsinformationen, die von dem Netzgerät dem entfernten UE zugewiesen werden, eine Ende-zu-Ende-Trägerkennung zwischen dem entfernten UE und dem Netzgerät.

14. Vorrichtung nach Anspruch 13, bei welcher, für ein UE-zu-UE-Relais-Szenario, der PDU-Header der Anpassungsschicht-PDU mindestens aufweist: Ende-zu-Ende-Trägerkennungen eines ersten entfernten UE und eines zweiten entfernten UE auf der Sidelink-Schnittstelle.

15. Vorrichtung nach Anspruch 14, wobei:
die Ende-zu-Ende-Trägerkennungen des ersten entfernten UE und des zweiten entfernten UE auf der Sidelink-Schnittstelle aufweisen: die Sidelink-Schnittstellen-Quellen-L2-ID, die Sidelink-Schnittstellen-Ziel-L2-ID und die logische Kanalkennung der Sidelink-Schnittstelle; oder die Ende-zu-Ende-Trägerkennungen des ersten entfernten UE und des zweiten entfernten UE auf der Sidelink-Schnittstelle umfassen: die Sidelink-Schnittstellen-Quellen-L2-ID, die Sidelink-Schnittstellen-Ziel-L2-ID und die Sidelink-Schnittstellen-Trägerkennung;
wobei für ein UE-zu-Netz-Relais-Szenario das Einrichtungsmodul ferner dazu ausgebildet ist,
die Ende-zu-Ende-Anpassungsschicht zwischen dem entfernten UE und dem Netzgerät einzurichten; oder,
die Ende-zu-Ende-Anpassungsschicht zwischen einem Relais-UE und dem Netzgerät einzurichten,
wobei für ein UE-zu-UE-Relais-Szenario das Einrichtungsmodul ferner dazu ausgebildet ist,
die Ende-zu-Ende-Anpassungsschicht zwischen einem ersten entfernten UE und einem zweiten entfernten UE einzurichten; oder
die Ende-zu-Ende-Anpassungsschicht zwischen einem Relais-UE und dem zweiten entfernten UE einzurichten.

## Revendications

1. Procédé de transmission d'informations, comprenant l'étape consistant à :
dans un scénario de relais de couche 2, dite L2, établir (301) une couche d'adaptation de bout en bout ; dans lequel une fonction de la couche d'adaptation de bout en bout comprend l'un d'un routage et d'une mise en correspondance de porteuses, ou une combinaison de ces derniers ;
**caractérisé en ce que** le procédé fait appel à :
pour un scénario de relais d'UE à réseau, un en-tête d'unité de données de protocole, dite PDU, d'une PDU de couche d'adaptation comprenant au moins : un identifiant de porteuse d'un UE distant sur une interface de liaison latérale, ou un identifiant d'une porteuse de bout en bout entre l'UE distant et le dispositif de réseau attribué par le dispositif de réseau à l'UE distant ;
dans lequel l'identifiant de porteuse de l'UE distant sur l'interface de liaison latérale comprend au moins : un ID de L2 de source d'interface de liaison latérale, un ID de L2 de destination d'interface de liaison latérale et un identifiant de canal logique d'interface de liaison latérale ;
dans lequel l'identifiant de la porteuse de bout en bout entre l'UE distant et le dispositif de réseau attribué par le réseau à l'UE distant comprend : des informations d'identification d'UE attribuées par le dispositif de réseau à l'UE distant, un identifiant de canal logique de bout en bout entre l'UE distant et le dispositif de réseau ; ou,
l'identifiant de la porteuse de bout en bout entre l'UE distant et le dispositif de réseau attribué par le dispositif de réseau à l'UE distant comprend : les informations d'identification d'UE attribuées par le dispositif de réseau à l'UE distant, un identifiant de porteuse de bout en bout entre l'UE distant et le dispositif de réseau.

2. Procédé selon la revendication 1, dans lequel, pour un scénario de relais d'UE à UE, l'en-tête de PDU de la PDU de couche d'adaptation comprend au moins : des identifiants de porteuse de bout en bout d'un premier UE distant et d'un second UE distant sur l'interface de liaison latérale.

3. Procédé selon la revendication 2, dans lequel,
les identifiants de porteuse de bout en bout du premier UE distant et du second UE distant sur l'interface de liaison latérale comprennent : l'ID de L2 de source d'interface de liaison latérale, l'ID de L2 de destination d'interface de liaison latérale et l'identifiant de canal logique d'interface de liaison latérale ; ou, les identifiants de porteuse de bout en bout du premier UE distant et du second UE distant sur l'interface de liaison latérale comprennent : l'ID de L2 de source d'interface de liaison latérale, l'ID de L2 de destination d'interface de liaison latérale et l'identifiant de porteuse d'interface de liaison latérale.

4. Procédé selon la revendication 3, dans lequel l'en-tête de PDU de la PDU de couche d'adaptation comprend en outre un identifiant de type de diffusion d'interface de liaison latérale.

5. Procédé selon l'une quelconque des revendications 1 à 4, dans lequel, pour un scénario de relais d'UE à réseau, l'étape d'établissement d'une couche d'adaptation de bout en bout consiste à :
établir la couche d'adaptation de bout en bout entre l'UE et le dispositif de réseau ; ou,
établir la couche d'adaptation de bout en bout entre un UE relais et le dispositif de réseau.

6. Procédé selon la revendication 5, dans lequel l'étape d'établissement de la couche d'adaptation de bout en bout entre l'UE distant et le dispositif de réseau consiste à :
ajouter la couche d'adaptation de bout en bout au-dessus d'une couche de commande de liaison radio, dite RLC, de l'UE distant et au-dessus d'une couche de RLC du dispositif de réseau.

7. Procédé selon la revendication 6, comprenant en outre les étapes consistant à :
si l'en-tête de PDU de la PDU de couche d'adaptation comprend au moins : l'identifiant de porteuse de l'UE distant sur l'interface de liaison latérale :
dans le sens liaison montante, générer, par la couche d'adaptation de l'UE distant, la PDU de couche d'adaptation, et délivrer la PDU de couche d'adaptation à une entité de RLC correspondante conformément à une première relation de mise en correspondance ; la première relation de mise en correspondance étant une relation de mise en correspondance entre la porteuse de bout en bout entre le dispositif de réseau et l'UE distant et la porteuse d'interface de liaison latérale de l'UE distant ;
recevoir, par l'UE relais, la PDU de couche d'adaptation, et délivrer la PDU de couche d'adaptation à une entité de RLC correspondant à une porteuse de liaison terrestre d'interface Uu conformément à une deuxième relation de mise en correspondance et à l'identifiant de porteuse de l'UE distant sur l'interface de liaison latérale ; la deuxième relation de mise en correspondance étant une relation de mise en correspondance entre une porteuse d'interface de liaison latérale de l'UE distant et une porteuse de liaison terrestre d'interface Uu de l'UE distant ;
déterminer, par le dispositif de réseau, l'identifiant de porteuse de la porteuse de bout en bout entre l'UE distant et le dispositif de réseau correspondant à la PDU de couche d'adaptation conformément à une troisième relation de mise en correspondance et à l'identifiant de porteuse de l'UE distant sur l'interface de liaison latérale compris dans l'en-tête de PDU de la PDU de couche d'adaptation, et déterminer une entité de protocole de convergence de données par paquets, dit PDCP, correspondante ; la troisième relation de mise en correspondance étant une relation de mise en correspondance entre la porteuse d'interface de liaison latérale de l'UE distant et la porteuse de bout en bout entre l'UE distant et le dispositif de réseau ;
ou
le procédé comprend en outre les étapes consistant à :
si l'en-tête de PDU de la PDU de couche d'adaptation comprend au moins : l'identifiant de porteuse de l'UE distant sur l'interface de liaison latérale :
dans le sens liaison descendante, générer, par la couche d'adaptation du dispositif de réseau, la PDU de couche d'adaptation, et délivrer la PDU de couche d'adaptation à l'entité de RLC correspondante conformément à une quatrième relation de mise en correspondance ; la quatrième relation de mise en correspondance étant une relation de mise en correspondance entre la porteuse de bout en bout entre le dispositif de réseau et l'UE distant et la porteuse de liaison terrestre d'interface Uu de l'UE distant ;
recevoir, par l'UE relais, la PDU de couche d'adaptation, déterminer une porteuse d'interface de liaison latérale correspondante conformément à l'identifiant de porteuse de l'UE distant sur l'interface de liaison latérale, et délivrer la PDU de couche d'adaptation à l'entité de RLC correspondant à la porteuse d'interface de liaison latérale ;
recevoir, par l'UE distant, la PDU de couche d'adaptation, et déterminer l'identifiant de porteuse de la porteuse de bout en bout entre l'UE distant et le dispositif de réseau correspondant à la PDU de couche d'adaptation conformément à une cinquième relation de mise en correspondance et à l'identifiant de porteuse de l'UE distant sur l'interface de liaison latérale compris dans l'en-tête de PDU de la PDU de couche d'adaptation, et déterminer une entité de PDCP correspondante ; la cinquième relation de mise en correspondance étant une relation de mise en correspondance entre la porteuse d'interface de liaison latérale de l'UE distant et la porteuse de bout en bout entre l'UE distant et le dispositif de réseau ;
ou
le procédé comprend en outre les étapes consistant à :
si l'en-tête de PDU de la PDU de couche d'adaptation comprend au moins : l'identifiant de la porteuse de bout en bout entre l'UE distant et le dispositif de réseau attribué par le dispositif de réseau à l'UE distant :
dans le sens liaison montante, générer, par la couche d'adaptation de l'UE distant, la PDU de couche d'adaptation, et délivrer la PDU de couche d'adaptation à une entité de RLC correspondante conformément à une sixième relation de mise en correspondance ; la sixième relation de mise en correspondance étant une relation de mise en correspondance entre la porteuse de bout en bout entre le dispositif de réseau et l'UE distant et la porteuse d'interface de liaison latérale de l'UE distant ;
recevoir, par l'UE relais, la PDU de couche d'adaptation, et délivrer la PDU de couche d'adaptation à une entité de RLC correspondant à la porteuse de liaison terrestre d'interface Uu conformément à une septième relation de mise en correspondance ; la septième relation de mise en correspondance étant une relation de mise en correspondance entre la porteuse d'interface de liaison latérale de l'UE distant et la porteuse de liaison terrestre d'interface Uu de l'UE distant ;
recevoir, par le dispositif de réseau, la PDU de couche d'adaptation et déterminer l'entité de PDCP correspondante conformément à l'identifiant de la porteuse de bout en bout entre l'UE distant et le dispositif de réseau attribué par le dispositif de réseau à l'UE distant compris dans l'en-tête de PDU de la PDU de couche d'adaptation ;
ou
le procédé comprend en outre les étapes consistant à :
si l'en-tête de PDU de la PDU de couche d'adaptation comprend au moins : l'identifiant de la porteuse de bout en bout entre l'UE distant et le dispositif de réseau attribué par le dispositif de réseau à l'UE distant :
dans le sens liaison descendante, générer, par la couche d'adaptation du dispositif de réseau, la PDU de couche d'adaptation, et délivrer la PDU de couche d'adaptation à l'entité de RLC correspondante conformément à une huitième relation de mise en correspondance ; la huitième relation de mise en correspondance étant une relation de mise en correspondance entre la porteuse de bout en bout entre le dispositif de réseau et l'UE distant et la porteuse de liaison terrestre d'interface Uu de l'UE distant ;
recevoir, par l'UE relais, la PDU de couche d'adaptation, et déterminer la porteuse d'interface de liaison latérale correspondante conformément à l'identifiant de la porteuse de bout en bout entre l'UE distant et le dispositif de réseau attribué par le dispositif de réseau à l'UE distant et à une neuvième relation de mise en correspondance, et délivrer la PDU de couche d'adaptation à l'entité de RLC correspondant à la porteuse d'interface de liaison latérale ; la neuvième relation de mise en correspondance étant une relation de mise en correspondance entre la porteuse de liaison terrestre d'interface Uu de l'UE distant et la porteuse d'interface de liaison latérale de l'UE distant ;
recevoir, par l'UE distant, la PDU de couche d'adaptation, et déterminer l'entité de PDCP correspondante conformément à l'identifiant de la porteuse de bout en bout entre l'UE distant et le dispositif de réseau attribué par le dispositif de réseau à l'UE distant compris dans l'en-tête de PDU de la PDU de couche d'adaptation.

8. Procédé selon la revendication 5, dans lequel l'étape d'établissement de la couche d'adaptation de bout en bout entre l'UE relais et le dispositif de réseau consiste à :
ajouter respectivement la couche d'adaptation de bout en bout au-dessus de la couche de RLC de l'UE relais et au-dessus de la couche de RLC des dispositifs de réseau.

9. Procédé selon la revendication 8, comprenant en outre les étapes consistant à :
si l'en-tête de PDU de la PDU de couche d'adaptation comprend au moins : l'identifiant de porteuse de l'UE distant sur l'interface de liaison latérale :
dans le sens liaison montante, générer, par l'UE distant, une PDU de PDCP, et délivrer la PDU de PDCP à une entité de RLC correspondante conformément à une dixième relation de mise en correspondance ; la dixième relation de mise en correspondance étant une relation de mise en correspondance entre la porteuse de bout en bout entre l'UE distant et le dispositif de réseau et la porteuse d'interface de liaison latérale de l'UE distant ;
générer, par l'UE relais, la PDU de couche d'adaptation conformément à la PDU de PDCP, et délivrer la PDU de couche d'adaptation à l'entité de RLC correspondante conformément à une onzième relation de mise en correspondance ; la onzième relation de mise en correspondance étant une relation de mise en correspondance entre la porteuse d'interface de liaison latérale de l'UE distant et la porteuse de liaison terrestre d'interface Uu de l'UE distant ;
déterminer, par le dispositif de réseau, l'identifiant de porteuse de la porteuse de bout en bout entre l'UE distant et le dispositif de réseau correspondant à la PDU de couche d'adaptation conformément à une douzième relation de mise en correspondance et à l'identifiant de porteuse de l'UE distant sur l'interface de liaison latérale compris dans l'en-tête de PDU de la PDU de couche d'adaptation, et déterminer l'entité de PDCP correspondante ; la douzième relation de mise en correspondance étant une relation de mise en correspondance entre la porteuse d'interface de liaison latérale de l'UE distant et la porteuse de bout en bout entre l'UE distant et le dispositif de réseau ;
ou
le procédé comprend en outre les étapes consistant à :
si l'en-tête de PDU de la PDU de couche d'adaptation comprend au moins : l'identifiant de porteuse de l'UE distant sur l'interface de liaison latérale :
dans le sens liaison descendante, générer, par la couche d'adaptation du dispositif de réseau, la PDU de couche d'adaptation, et délivrer la PDU de couche d'adaptation à l'entité de RLC correspondante conformément à une treizième relation de mise en correspondance ; la treizième relation de mise en correspondance étant une relation de mise en correspondance entre la porteuse de bout en bout entre le dispositif de réseau et l'UE distant et la porteuse de liaison terrestre d'interface Uu de l'UE distant ;
recevoir, par l'UE relais, la PDU de couche d'adaptation, supprimer un en-tête de couche d'adaptation de la PDU de couche d'adaptation, et obtenir un paquet de données à traiter ; déterminer la porteuse d'interface de liaison latérale correspondante conformément à l'identifiant de porteuse de l'UE distant sur l'interface de liaison latérale, et délivrer le paquet de données à traiter à l'entité de RLC correspondant à la porteuse d'interface de liaison latérale ;
recevoir, par l'UE distant, la PDU de RLC, et déterminer l'entité de PDCP correspondante conformément à une quatorzième relation de mise en correspondance ; la quatorzième relation de mise en correspondance étant une relation de mise en correspondance entre la porteuse d'interface de liaison latérale de l'UE distant et la porteuse de bout en bout entre l'UE distant et le dispositif de réseau ;
ou
le procédé comprend en outre les étapes consistant à :
si l'en-tête de PDU de la PDU de couche d'adaptation comprend au moins : l'identifiant de la porteuse de bout en bout entre l'UE distant et le dispositif de réseau attribué par le dispositif de réseau à l'UE distant :
dans le sens liaison montante, générer, par l'UE distant, la PDU de PDCP, et délivrer la PDU de PDCP à l'entité de RLC correspondante conformément à une quinzième relation de mise en correspondance ; la quinzième relation de mise en correspondance étant une relation de mise en correspondance entre la porteuse de bout en bout entre l'UE distant et le dispositif de réseau et la porteuse d'interface de liaison latérale de l'UE distant ;
générer, par l'UE relais, la PDU de couche d'adaptation conformément à la PDU de PDCP, et délivrer la PDU de couche d'adaptation à l'entité de RLC correspondant à la porteuse de liaison terrestre d'interface Uu conformément à une seizième relation de mise en correspondance ; la seizième relation de mise en correspondance étant une relation de mise en correspondance entre la porteuse d'interface de liaison latérale de l'UE distant et la porteuse de liaison terrestre d'interface Uu de l'UE distant ;
déterminer, par le dispositif de réseau, l'entité de PDCP correspondante conformément à l'identifiant de la porteuse de bout en bout entre l'UE distant et le dispositif de réseau attribué par le dispositif de réseau à l'UE distant et compris dans l'en-tête de PDU de la PDU de couche d'adaptation ;
le procédé comprend en outre les étapes consistant à :
si l'en-tête de PDU de la PDU de couche d'adaptation comprend au moins : l'identifiant de la porteuse de bout en bout entre l'UE distant et le dispositif de réseau attribué par le dispositif de réseau à l'UE distant :
dans le sens liaison descendante, générer, par la couche d'adaptation du dispositif de réseau, la PDU de couche d'adaptation, et délivrer la PDU de couche d'adaptation à l'entité de RLC correspondante conformément à une dix-septième relation de mise en correspondance ; la dix-septième relation de mise en correspondance étant une relation de mise en correspondance entre la porteuse de bout en bout entre le dispositif de réseau et l'UE distant et la porteuse de liaison terrestre d'interface Uu de l'UE distant ;
recevoir, par l'UE relais, la PDU de couche d'adaptation, supprimer l'en-tête de couche d'adaptation de la PDU de couche d'adaptation, et obtenir un paquet de données à traiter ; déterminer la porteuse d'interface de liaison latérale correspondant à l'UE distant conformément à une dix-huitième relation de mise en correspondance, et délivrer le paquet de données à traiter à l'entité de RLC correspondant à la porteuse d'interface de liaison latérale ; la dix-huitième relation de mise en correspondance étant une relation de mise en correspondance entre la porteuse de liaison terrestre d'interface Uu de l'UE distant et la porteuse d'interface de liaison latérale de l'UE distant ;
recevoir, par l'UE distant, la PDU de RLC, déterminer l'entité de PDCP correspondante conformément à une dix-neuvième relation de mise en correspondance ; la dix-neuvième relation de mise en correspondance étant une relation de mise en correspondance entre la porteuse d'interface de liaison latérale de l'UE distant et la porteuse de bout en bout entre l'UE distant et le dispositif de réseau.

10. Procédé selon la revendication 2, dans lequel, pour le scénario de relais d'UE à UE, l'étape d'établissement de la couche d'adaptation de bout en bout consiste à :
établir la couche d'adaptation de bout en bout entre le premier UE distant et le second UE distant ; ou,
établir la couche d'adaptation de bout en bout entre l'UE relais et le second UE distant.

11. Procédé selon la revendication 10, dans lequel l'étape d'établissement de la couche d'adaptation de bout en bout entre le premier UE distant et le second UE distant consiste à :
ajouter respectivement la couche d'adaptation de bout en bout au-dessus de la couche de RLC du premier UE distant et au-dessus de la couche de RLC du second UE distant,
dans lequel le procédé comprend en outre les étapes consistant à :
générer, par une couche d'adaptation du premier UE distant, une PDU de couche d'adaptation, et déterminer une entité de RLC correspondante lorsque la PDU de couche d'adaptation est transmise entre le premier UE distant et l'UE relais conformément à une vingtième relation de mise en correspondance ; la vingtième relation de mise en correspondance étant une relation de mise en correspondance entre une porteuse de bout en bout de liaison latérale entre le premier UE distant et le second UE distant et une porteuse d'interface de liaison latérale entre le premier UE distant et l'UE relais ;
recevoir, par l'UE relais, la PDU de couche d'adaptation, et déterminer l'entité de RLC correspondante lorsque la PDU de couche d'adaptation est transmise entre l'UE relais et le second UE distant conformément à une vingt-et-unième relation de mise en correspondance ; la vingt-et-unième relation de mise en correspondance étant une relation de mise en correspondance entre la porteuse d'interface de liaison latérale entre le premier UE distant et l'UE relais et la porteuse d'interface de liaison latérale entre l'UE relais et le second UE distant ;
recevoir, par le second UE distant, la PDU de couche d'adaptation, et déterminer l'entité de PDCP correspondante conformément aux identifiants de porteuse de bout en bout de l'UE distant et du second UE distant sur l'interface de liaison latérale compris dans l'en-tête de PDU de la PDU de couche d'adaptation.

12. Procédé selon la revendication 10, dans lequel l'étape d'établissement de la couche d'adaptation de bout en bout entre le premier UE distant et le second UE distant consiste à :
ajouter respectivement la couche d'adaptation de bout en bout au-dessus de la couche de RLC de l'UE relais et au-dessus de la couche de RLC du second UE distant,
le procédé comprend en outre les étapes consistant à :
générer, par le premier UE distant, la PDU de PDCP, et déterminer l'entité de RLC correspondant à la PDU de PDCP conformément à une vingt-deuxième relation de mise en correspondance ; la vingt-deuxième relation de mise en correspondance étant une relation de mise en correspondance entre la porteuse de bout en bout de liaison latérale entre le premier UE distant et le second UE distant et la porteuse de bout en bout entre le premier UE distant et l'UE relais ;
générer, par l'UE relais, la PDU de couche d'adaptation conformément à la PDU de PDCP, et déterminer une entité de RLC correspondante lorsque la PDU de couche d'adaptation est transmise entre l'UE relais et le second UE distant conformément à une vingt-troisième relation de mise en correspondance ; la vingt-troisième relation de mise en correspondance étant une relation de mise en correspondance entre la porteuse d'interface de liaison latérale entre le premier UE distant et l'UE relais et la porteuse d'interface de liaison latérale entre l'UE relais et le second UE distant ;
recevoir, par le second UE distant, la PDU de couche d'adaptation, et déterminer l'entité de PDCP correspondante conformément aux identifiants de porteuse de bout en bout du premier UE distant et du second UE distant sur l'interface de liaison latérale compris dans l'en-tête de PDU de la PDU de couche d'adaptation.

13. Dispositif de transmission d'informations (2100), comprenant :
un module d'établissement (2101), configuré pour établir une couche d'adaptation de bout en bout dans un scénario de relais de L2 ; dans lequel, une fonction de la couche d'adaptation comprend l'un : d'un routage, d'une mise en correspondance de porteuses, ou une combinaison de ces derniers ;
**caractérisé en ce que**, pour un scénario de relais d'UE à réseau, un en-tête d'unité de données de protocole, dite PDU, d'une PDU de couche d'adaptation comprend au moins : un identifiant de porteuse d'un UE distant sur une interface de liaison latérale, ou un identifiant d'une porteuse de bout en bout entre l'UE distant et un dispositif de réseau attribué par le dispositif de réseau à l'UE distant ;
dans lequel, l'identifiant de porteuse de l'UE distant sur l'interface de liaison latérale comprend au moins : un ID de L2 de source d'interface de liaison latérale, un ID de L2 de destination d'interface de liaison latérale et un identifiant de canal logique d'interface de liaison latérale ;
dans lequel l'identifiant de la porteuse de bout en bout entre l'UE distant et le dispositif de réseau attribué par le dispositif de réseau à l'UE distant comprend : des informations d'identification d'UE attribuées par le dispositif de réseau à l'UE distant, un identifiant de canal logique de bout en bout entre l'UE distant et le dispositif de réseau ; ou,
l'identifiant de la porteuse de bout en bout entre l'UE distant et le dispositif de réseau attribué par le dispositif de réseau à l'UE distant comprend : les informations d'identification d'UE attribuées par le dispositif de réseau à l'UE distant, un identifiant de porteuse de bout en bout entre l'UE distant et le dispositif de réseau.

14. Dispositif selon la revendication 13, dans lequel, pour un scénario de relais d'UE à UE, l'en-tête de PDU de la PDU de couche d'adaptation comprend au moins : des identifiants de porteuse de bout en bout d'un premier UE distant et d'un second UE distant sur l'interface de liaison latérale.

15. Dispositif selon la revendication 14, dans lequel,
les identifiants de porteuse de bout en bout du premier UE distant et du second UE distant sur l'interface de liaison latérale comprennent : l'ID de L2 de source d'interface de liaison latérale, l'ID de L2 de destination d'interface de liaison latérale et l'identifiant de canal logique d'interface de liaison latérale ; ou, les identifiants de porteuse de bout en bout du premier UE distant et du second UE distant sur l'interface de liaison latérale comprennent : l'ID de L2 de source d'interface de liaison latérale, l'ID de L2 de destination d'interface de liaison latérale et l'identifiant de porteuse d'interface de liaison latérale,
dans lequel, pour un scénario de relais d'UE à réseau, le module d'établissement est en outre configuré pour :
établir la couche d'adaptation de bout en bout entre l'UE distant et le dispositif de réseau ; ou,
établir la couche d'adaptation de bout en bout entre un UE relais et le dispositif de réseau,
dans lequel, pour un scénario de relais d'UE à UE, le module d'établissement est en outre configuré pour :
établir la couche d'adaptation de bout en bout entre un premier UE distant et un second UE distant ; ou,
établir la couche d'adaptation de bout en bout entre un UE relais et le second UE distant.
